(19) Europäisches Patentamt
European Patent Office
Office européen des brevets

(11) **EP 3 733 739 B1**

(12) **EUROPEAN PATENT SPECIFICATION**

(45) Date of publication and mention
of the grant of the patent:
**23.08.2023 Bulletin 2023/34**

(21) Application number: **18896400.1**

(22) Date of filing: **21.12.2018**

(51) International Patent Classification (IPC):
*C08J 3/02* *(2006.01)*    *B41M 1/10* *(2006.01)*
*C09D 11/023* *(2014.01)*    *C09D 11/102* *(2014.01)*
*C09D 11/033* *(2014.01)*    *C09D 11/107* *(2014.01)*

(52) Cooperative Patent Classification (CPC):
**C09D 11/033; C09D 11/107;** B41M 1/10

(86) International application number:
**PCT/JP2018/047334**

(87) International publication number:
**WO 2019/131541 (04.07.2019 Gazette 2019/27)**

(54) **RESIN PARTICLE DISPERSION**

HARZTEILCHENDISPERSION

DISPERSION DE PARTICULES DE RÉSINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.12.2017 JP 2017250256**

(43) Date of publication of application:
**04.11.2020 Bulletin 2020/45**

(73) Proprietor: **Kao Corporation**
**Chuo-ku,**
**Tokyo 103-8210 (JP)**

(72) Inventors:
• **SATO, Takahiro**
**Wakayama-shi, Wakayama 640-8580 (JP)**
• **TAKENO, Hirotaka**
**Wakayama-shi, Wakayama 640-8580 (JP)**
• **SUZUKI, Takayuki**
**Wakayama-shi, Wakayama 640-8580 (JP)**

(74) Representative: **Hoffmann Eitle**
**Patent- und Rechtsanwälte PartmbB**
**Arabellastraße 30**
**81925 München (DE)**

(56) References cited:
**WO-A1-2013/179838    WO-A1-2015/087710**
**JP-A- 2010 253 383    JP-A- 2011 012 172**
**JP-A- 2015 030 799    JP-A- 2016 060 885**

EP 3 733 739 B1

**Description**

FIELD OF THE INVENTION

The present invention relates to a resin particle dispersion as defined in the claims.

BACKGROUND OF THE INVENTION

Gravure printing is one of intaglio printing techniques in which an ink filled in recessed portions formed on a printing plate is transferred under pressure. The gravure printing is excellent in tone gradation reproducibility and therefore has been widely used in commercial printing application fields such as magazines, catalogues, pamphlets, etc. In recent years, there is an increasing demand for not only printing techniques using a conventional printing paper having a white ground, but also printing techniques using a printing substrate having a non-white ground, such as a corrugated board, a paper board, a resin film, etc. In particular, from the viewpoint of realizing energy saving and reduction of environmental burdens, it has been required that inks are improved in coating properties such as substrate-adhesion properties against a resin film substrate constituted of a polyolefin resin or a polyester resin, etc.

In the case of printing on the substrate having a non-white ground, a white ink is used for the purpose of expressing a white color or enhancing visibility of printed images. As a pigment for the white ink, titanium oxide having high hiding power has been generally used.

However, an aqueous ink containing the titanium oxide, etc., tends to suffer from problems such as deteriorated adhesion to the substrate. Moreover, the aqueous ink containing the titanium oxide at a high concentration tends to further suffer from such a problem that the titanium oxide is easily flocculated so that the resulting ink is deteriorated in storage stability (pigment flocculation-inhibiting properties).

The aqueous ink composition generally contains a pigment, a polymer and water in which the polymer is added as a dispersant for the pigment or a binder for the purpose of improving coating properties thereof on the resulting printed material. The polymer contained in the aqueous ink composition has been often used in the form of a dispersion of core/shell-type resin particles obtained by conducting emulsion polymerization in the presence of a core portion resin.

For example, JP 2014-205816A (Patent Literature 1) discloses a dispersion of core/shell-type resin particles which is capable of exhibiting excellent coating properties against a resin film substrate, and an aqueous ink composition containing the dispersion, which can be used for gravure printing, etc.

More specifically, in the Patent Literature 1, there are described a dispersion of core/shell-type resin particles for an aqueous ink having a specific average particle size and a specific Tg, which is produced by polymerizing an ethylenically unsaturated monomer in an aqueous medium in the presence of a water-soluble resin, and in which the water-soluble resin is obtained by polymerizing an aromatic ethylenically unsaturated monomer and a carboxy group-containing ethylenically unsaturated monomer, and the aforementioned ethylenically unsaturated monomer to be polymerized in the aqueous medium contains an aromatic ethylenically unsaturated monomer and an ethylenically unsaturated monomer as essential components, and an aqueous ink composition.

JP 2015 030799 A relates to a clear ink, an ink jet recording method, an ink set, an ink cartridge, a recording unit, and an ink jet recording apparatus. The clear ink for inkjet includes polymer fine particles.

SUMMARY OF THE INVENTION

The present invention relates to a resin particle dispersion containing core/shell-type resin particles (A), a glycol ether (B) and water, in which:

a core portion resin of the core/shell-type resin particles (A) contains a constitutional unit derived from a (meth)acrylic acid ester containing a hydrocarbon group having not less than 2 and not more than 18 carbon atoms in an amount of not less than 40% by mass on the basis of constitutional units constituting the core portion resin, and an acid value of the core/shell-type resin particles (A) is not less than 50 mgKOH/g and not more than 100 mgKOH/g; and
a hydrocarbon group in an ether moiety of the glycol ether (B) has not less than 2 and not more than 8 carbon atoms, and a content of the glycol ether (B) in the resin particle dispersion is not less than 2.8% by mass, and
a mass ratio of the core portion resin (a1) to a resin (a2) corresponding to a shell portion other than the core portion resin [(a1)/(a2)] in the core/shell-type resin particles (A) is not less than 1 and not more than 1.35.

DETAILED DESCRIPTION OF THE INVENTION

The aqueous ink has been required to exhibit good printability on various resin films, high versatility and excellent storage stability and substrate-adhesion properties.

In the aqueous ink compositions described in the Patent Literature 1, although the glycol ether whose ether moiety contains a hydrocarbon group having 2 carbon atoms is compounded in an amount of 2.5% by mass at the maximum in the ink composition as described in Examples thereof, it is necessary to use two or more kinds of monomers containing a specific amount of an aromatic ethylenically unsaturated monomer as resins constituting a core and a shell of the respective core/shell-type resin particles.

The present invention relates to a resin particle dispersion which can be produced by using core/shell-type resin particles whose core portion contains a constitutional unit derived from a specific (meth)acrylic acid ester without need of using an aromatic ethylenically unsaturated monomer therein, and can be used as an aqueous ink that is excellent in storage stability and substrate-adhesion properties.

The present inventors have found that the aforementioned conventional problems can be solved by using core/shell-type resin particles that include a core portion containing a specific amount of a constitutional unit derived from a specific (meth)acrylic acid ester and have a specific acid value, in combination of a specific glycol ether.

That is, the present invention relates to a resin particle dispersion containing core/shell-type resin particles (A), a glycol ether (B) and water, in which:

a core portion resin of the core/shell-type resin particles (A) contains a constitutional unit derived from a (meth)acrylic acid ester containing a hydrocarbon group having not less than 2 and not more than 18 carbon atoms in an amount of not less than 40% by mass on the basis of constitutional units constituting the core portion resin, and an acid value of the core/shell-type resin particles (A) is not less than 50 mgKOH/g and not more than 100 mgKOH/g; and a hydrocarbon group in an ether moiety of the glycol ether (B) has not less than 2 and not more than 8 carbon atoms, and a content of the glycol ether (B) in the resin particle dispersion is not less than 2.8% by mass, and a mass ratio of the core portion resin (a1) to a resin (a2) corresponding to a shell portion other than the core portion resin [(a1)/(a2)] in the core/shell-type resin particles (A) is not less than 1 and not more than 1.35.

In accordance with the present invention, it is possible to provide a resin particle dispersion which can be used as an aqueous ink that is excellent in storage stability and substrate-adhesion properties.

[Resin particle dispersion]

The resin particle dispersion of the present invention is characterized by containing core/shell-type resin particles (A) (hereinafter also referred to merely as "resin particles (A)"), a glycol ether (B) and water, in which:

a core portion resin of the core/shell-type resin particles (A) contains a constitutional unit derived from a (meth)acrylic acid ester containing a hydrocarbon group having not less than 2 and not more than 18 carbon atoms in an amount of not less than 40% by mass on the basis of constitutional units constituting the core portion resin, and an acid value of the core/shell-type resin particles (A) is not less than 50 mgKOH/g and not more than 100 mgKOH/g; and a hydrocarbon group in an ether moiety of the glycol ether (B) has not less than 2 and not more than 8 carbon atoms, and a content of the glycol ether (B) in the resin particle dispersion is not less than 2.8% by mass, and a mass ratio of the core portion resin (a1) to a resin (a2) corresponding to a shell portion other than the core portion resin [(a1)/(a2)] in the core/shell-type resin particles (A) is not less than 1 and not more than 1.35.

The resin particle dispersion according to the present invention may also be used as an aqueous ink for printing, in particular, for gravure printing, by further incorporating a pigment, etc., therein. In addition, the resin particle dispersion according to the present invention may also be used as a clear ink when compounding no pigment therein.

The resin particle dispersion according to the present invention has such an effect that the dispersion can be used as an aqueous ink that is excellent in not only printability, but also storage stability and substrate-adhesion properties. The reason why the aforementioned advantageous effect can be attained by the present invention is considered as follows, though it is not clearly determined yet.

Since the acid value of the core/shell-type resin particles (A) according to the present invention is not less than 50 mgKOH/g and not more than 100 mgKOH/g, the resin particles (A) can be stabilized in the form of a dispersion thereof. The constitutional unit derived from the (meth)acrylic acid ester containing a hydrocarbon group having not less than 2 and not more than 18 carbon atoms which constitutes the core portion resin of the resin particles (A) has high affinity to the glycol ether (B). In addition, since the resin particles (A) contains the constitutional unit derived from the aforementioned (meth)acrylic acid ester in a comparatively large amount of not less than 40% by mass on the basis of constitutional units constituting the core portion resin, it is considered that the glycol ether (B) which is contained in the resin particle dispersion in an amount of not less than 2.8% by mass is allowed to penetrate into the resin particles (A) to plasticize the resin particles (A).

Also, the resin particles (A) having an adequate acid value is capable of not only imparting good stability to the resulting ink owing to an electrostatic repulsion force thereof, but also uniformly spreading the ink over a surface of a substrate such as a resin film, etc., even when applying the resin particle dispersion onto the surface of the substrate, so that water is evaporated in the course of drying the ink to thereby promote plasticization of the resin particles (A) and facilitate elastic deformation of the resin particles (A). As a result, it is considered that a film formed by flocculation between the resin particles (A) after evaporating and drying an ink vehicle containing the glycol ether (B) becomes a dense uniform film that is free of voids between the resin particles (A), and therefore acts like an elastomer capable of flexing around each fused portion between the resin particles as a base point, so that the resulting ink can be improved in substrate-adhesion properties.

<Core/Shell-Type Resin Particles (A)>

The resin particle dispersion according to the present invention contains the core/shell-type resin particles (A).

The core/shell-type resin particles (A) are resin particles having such a structure that the core portion resin is covered with a shell portion resin in which the core portion resin of the core/shell-type resin particles (A) contains the constitutional unit derived from the (meth)acrylic acid ester containing a hydrocarbon group having not less than 2 and not more than 18 carbon atoms in an amount of not less than 40% by mass on the basis of constitutional units constituting the core portion resin, and the acid value of the core/shell-type resin particles (A) is not less than 50 mgKOH/g and not more than 100 mgKOH/g. Meanwhile, in the case where the respective core/shell-type resin particles (A) are constituted of a plurality of phases, the resin located at an innermost core portion is defined as the core portion resin.

The core/shell-type resin particles (A) may be obtained, for example, by polymerizing a (meth)acrylic acid ester monomer containing a hydrocarbon group having not less than 2 and not more than 18 carbon atoms in the presence of an emulsion of a vinyl-based polymer (shell portion resin) produced by polymerizing a monomer mixture containing an ionic monomer, etc., as described hereinlater.

When polymerizing the aforementioned (meth)acrylic acid ester monomer in the presence of the emulsion of the vinyl-based polymer (shell portion resin), the vinyl-based polymer contained in the emulsion is allowed to be present on a surface of the core portion resin derived from the aforementioned (meth)acrylic acid ester containing no hydrophilic group, so that the core portion is formed of the polymer derived from the aforementioned (meth)acrylic acid ester, and the shell portion is formed of the vinyl-based polymer to thereby form the core/shell-type resin particles (A).

The acid value of the core/shell-type resin particles (A) means an acid value of a whole resin portion constituting the core portion and the shell portion, and is not less than 50 mgKOH/g and not more than 100 mgKOH/g from the viewpoint of improving storage stability and substrate-adhesion properties of the resulting ink.

The acid value of the core/shell-type resin particles (A) may be calculated from mass ratios between the respective monomers constituting the core/shell-type resin particles (A). In addition, the acid value of the core/shell-type resin particles (A) may also be measured by the method in which the core/shell-type resin particles (A) are dissolved in or swelled with an adequate organic solvent (e.g., methyl ethyl ketone), and then the resulting solution or swelled product is subjected to a neutralization titration method as prescribed in JIS K0070.

(Shell Portion Resin)

The shell portion resin of the core/shell-type resin particles (A) is not particularly limited. Examples of the shell portion resin include condensation-based resins such as polyesters, polyurethanes, etc.; vinyl-based polymers; and the like. Among these resins, from the viewpoint of improving storage stability and substrate-adhesion properties of the resulting ink, the shell portion resin is preferably a vinyl-based polymer obtained by addition-polymerizing a vinyl monomer (such as a vinyl compound, a vinylidene compound and a vinylene compound), and more preferably an acrylic polymer. The vinyl-based polymers used in the present invention may be either an appropriately synthesized product or a commercially available product.

The shell portion resin may be in the form of either a water-soluble polymer or a water-insoluble polymer. Among these polymers, from the viewpoint of improving storage stability and substrate-adhesion properties of the resulting ink, preferred is a water-soluble polymer.

The term "water-soluble" as used herein means that when dissolving a polymer in water, the resulting solution becomes transparent. More specifically, the term "water-soluble" means that when the polymer is dried to a constant weight at 105°C for 2 hours and then dissolved in 100 g of ion-exchanged water at 25°C until reaching a saturated concentration thereof, the solubility in water of the polymer is not less than 10 g.

The acid value of the shell portion resin is preferably not less than 100 mgKOH/g and more preferably not less than 120 mgKOH/g, and is also preferably not more than 280 mgKOH/g and more preferably not more than 250 mgKOH/g, from the viewpoint of improving substrate-adhesion properties of the resulting ink.

The shell portion resin that is formed of the vinyl-based polymer, in particular, the acrylic polymer, preferably contains a constitutional unit derived from (a) an ionic monomer (hereinafter also referred to merely as a "component (a)"), more preferably further contains, in addition to the constitutional unit derived from the component (a), at least one constitutional unit selected from the group consisting of a constitutional unit derived from (b) a hydrophobic monomer (hereinafter also referred to merely as a "component (b)") and a constitutional unit derived from (c) a hydrophilic nonionic monomer (hereinafter also referred to merely as a "component (c)"), and even more preferably contains the constitutional unit derived from the component (a) and the constitutional unit derived from the component (b).

The shell portion resin may be obtained, for example, by subjecting a monomer mixture containing the component (a), which may further contain at least one component selected from the group consisting of the component (b) and the component (c), if required, or a monomer mixture containing the component (a) and the component (b) (the respective monomer mixtures are hereinafter also referred to merely a "monomer mixture") to addition polymerization by conventionally known methods.

(a) Ionic Monomer

The ionic monomer (a) is used as a monomer component of the polymer from the viewpoint of improving dispersion stability of the resin particles (A). Examples of the ionic monomer (a) include an anionic monomer and a cationic monomer. Among these ionic monomers, preferred is an anionic monomer.

Examples of the anionic monomer include a carboxylic acid monomer, a sulfonic acid monomer, a phosphoric acid monomer, etc.

Among the aforementioned anionic monomers, from the viewpoint of improving dispersion stability of the resin particles (A), preferred is a carboxy group-containing carboxylic acid monomer, more preferred are acrylic acid, methacrylic acid, crotonic acid, itaconic acid, maleic acid, fumaric acid, citraconic acid, 2-methacryloyloxymethylsuccinic acid, etc., and even more preferred is at least one monomer selected from the group consisting of acrylic acid and methacrylic acid.

Examples of the cationic monomer include *N,N*-dimethylaminoethyl methacrylate, *N,N*-dimethylaminoethyl acrylamide, etc.

Meanwhile, the ionic monomer (a) may also include those monomers that have no ionicity under neutral conditions, but are converted into ions under acid or alkaline conditions, such as acids, amines, etc.

(b) Hydrophobic Monomer

The hydrophobic monomer (b) is used as a monomer component of the polymer from the viewpoint of improving dispersion stability of the resin particles (A). Examples of the hydrophobic monomer (b) include an alkyl (meth)acrylate, an aromatic group-containing monomer, etc.

The alkyl (meth)acrylate preferably include those alkyl (meth)acrylates containing an alkyl group having 1 to 22 carbon atoms and preferably 6 to 18 carbon atoms. Examples of the alkyl (meth)acrylate include methyl (meth)acrylate, ethyl (meth)acrylate, (iso)propyl (meth)acrylate, (*iso-* or *tert-*)butyl (meth)acrylate, (iso)amyl (meth)acrylate, cyclohexyl (meth)acrylate, 2-ethylhexyl (meth)acrylate, (iso)octyl (meth)acrylate, (iso)decyl (meth)acrylate, (iso)dodecyl (meth)acrylate, (iso)stearyl (meth)acrylate, etc.

Meanwhile, the terms "(*iso-* or *tert-*) " and "(iso)" as used herein mean both of the structure in which any of the groups expressed by "*iso-* or *tert-*" and "iso" is present, and the structure in which any of these groups is not present (i.e., normal). In addition, the term "(meth)acrylate" as used herein means an acrylate and/or a methacrylate.

The aromatic group-containing monomer is preferably in the form of a vinyl monomer containing an aromatic group having 6 to 22 carbon atoms which may also contain a substituent group containing a hetero atom, and more preferably a styrene-based monomer and an aromatic group-containing (meth) acrylate.

As the styrene-based monomer, preferred is at least one monomer selected from the group consisting of styrene, 2-methyl styrene and divinyl benzene, etc., and more preferred is styrene.

In addition, as the aromatic group-containing (meth)acrylate, preferred is at least one monomer selected from the group consisting of benzyl (meth)acrylate and phenoxyethyl (meth)acrylate, etc., and more preferred is benzyl (meth)acrylate.

(c) Hydrophilic Nonionic Monomer

The hydrophilic nonionic monomer (c) is used as a monomer component of the polymer from the viewpoint of improving dispersion stability of the resin particles (A).

Examples of the hydrophilic nonionic monomer (c) include 2-hydroxyethyl (meth)acrylate, 3-hydroxypropyl (meth)acrylate, a polyalkylene glycol (meth)acrylate such as polypropylene glycol (n = 2 to 30 in which n represents an average molar number of addition of oxyalkylene groups: hereinafter defined in the same way) (meth)acrylate, polyethylene glycol (n = 2 to 30) (meth) acrylate, etc., an alkoxy polyalkylene glycol (meth)acrylate such as methoxy polyethylene glycol (n = 1 to 30) (meth)acrylate, octoxy polyethylene glycol (n = 1 to 30) (meth)acrylate, etc., phenoxy (ethylene glycol/propylene glycol copolymer) (n = 1 to 30 in which n for ethylene glycol: n = 1 to 29) (meth)acrylate, and the like.

Specific examples of commercially available products of the hydrophilic nonionic monomer (c) include "NK ESTER M-20G", "NK ESTER M-40G", "NK ESTER M-90G", "NK ESTER M-230G" and the like as products available from Shin-Nakamura Chemical Co., Ltd.; and "BLEMMER PE-90", "BLEMMER PE-200", "BLEMMER PE-350", "BLEMMER PME-100", "BLEMMER PME-200", "BLEMMER PME-400" and the like, "BLEMMER PP-500", "BLEMMER PP-800", "BLEMMER PP-1000" and the like, "BLEMMER AP-150", "BLEMMER AP-400", "BLEMMER AP-550" and the like, and "BLEMMER 50PEP-300", "BLEMMER 50POEP-800B", "BLEMMER 43PAPE-600B" and the like as products available from NOF Corporation.

The aforementioned components (a) to (c) may be respectively used alone or in the form of a mixture of any two or more thereof.

The polymer used in the present invention may also contain, in addition to the constitutional units derived from the aforementioned components (a) to (c), a constitutional unit(s) derived from the other monomer(s), unless the advantageous effects of the present invention are adversely affected thereby.

(Contents of Respective Components in Monomer Mixture or Contents of Respective Constitutional Units in Polymer)

Upon production of the shell portion resin, the contents of the respective monomers in the monomer mixture containing the component (a) which may further contain at least one monomer selected from the group consisting of the component (b) and the component (c), if required (contents of non-neutralized components; hereinafter defined in the same way), or the contents of the constitutional units derived from the respective components in the shell portion resin are as follows from the viewpoint of improving storage stability and substrate-adhesion properties of the resulting ink.

The content of the ionic monomer (a) is preferably not less than 3% by mass, more preferably not less than 5% by mass and even more preferably not less than 8% by mass, and is also preferably not more than 60% by mass, more preferably not more than 50% by mass and even more preferably not more than 40% by mass.

The content of the hydrophobic monomer (b) is preferably not less than 20% by mass, more preferably not less than 40% by mass and even more preferably not less than 50% by mass, and is also preferably not more than 95% by mass, more preferably not more than 90% by mass and even more preferably not more than 85% by mass.

In the case where the hydrophilic nonionic monomer (c) is included, the content of the hydrophilic nonionic monomer (c) is preferably not less than 5% by mass, more preferably not less than 10% by mass and even more preferably not more than 20% by mass, and is also preferably not more than 60% by mass, more preferably not more than 55% by mass and even more preferably not more than 50% by mass.

(Production of Shell Portion Resin)

The aforementioned shell portion resin may be produced by copolymerizing the monomer mixture by known polymerization methods. As the polymerization methods, preferred is a solution polymerization method.

An organic solvent used in the solution polymerization method is not particularly limited, and is preferably an organic polar solvent such as aliphatic alcohols having 1 to 3 carbon atoms, ketones having 3 to 8 carbon atoms, ethers, esters, etc. Specific examples of the organic polar solvent include methanol, ethanol, acetone and methyl ethyl ketone. Of these solvents, preferred is methyl ethyl ketone.

The polymerization may be carried out in the presence of a polymerization initiator or a polymerization chain transfer agent. As the polymerization initiator, preferred are azo-based compounds, and more preferred are 4,4'-azobis(4-cyanovaleric acid), 2,2-azobis(2,4-dimethylvaleronitrile), etc. As the polymerization chain transfer agent, preferred are mercaptans, and more preferred are 3-mercapto-propionic acid, 2-mercaptoethanol, etc.

The preferred polymerization conditions may vary depending upon the kind of polymerization initiator used, etc. The polymerization temperature is preferably not lower than 50°C and not higher than 90°C, and the polymerization time is preferably not less than 1 hour and not more than 20 hours. In addition, the polymerization is preferably conducted in a nitrogen gas atmosphere or an atmosphere of an inert gas such as argon, etc.

After completion of the polymerization reaction, the polymer thus produced may be isolated from the reaction solution by conventionally known methods such as reprecipitation and removal of the solvent by distillation. In addition, the thus obtained polymer may be subjected to reprecipitation, membrane separation, chromatography, extraction, etc., for removing unreacted monomers, etc., therefrom.

The shell portion resin is preferably directly used as such in the form of a polymer solution without removing the solvent used in the polymerization reaction therefrom from the viewpoint of enhancing productivity of the resin particle dispersion. The solid content of the polymer solution is preferably not less than 20% by mass, more preferably not less than 25% by mass and even more preferably not less than 30% by mass, and is also preferably not more than 70% by mass, more preferably not more than 65% by mass and even more preferably not more than 60% by mass, from the viewpoint of enhancing productivity of the resin particle dispersion.

The solid content of the polymer solution may be measured by the method described in Examples below.

(Neutralization)

In the present invention, in the case where the polymer as the shell portion resin is an anionic polymer, the anionic groups contained in the polymer may be neutralized using a neutralizing agent. When using the neutralizing agent, the anionic groups contained in the polymer is preferably neutralized such that the pH value of the resulting dispersion falls within the range of not less than 7 and not more than 11.

As the neutralizing agent, there may be mentioned hydroxides of alkali metals, ammonia, organic amines, etc. Examples of the hydroxides of alkali metals include lithium hydroxide, sodium hydroxide, potassium hydroxide and cesium hydroxide. Examples of the organic amines include trimethylamine, ethylamine, diethylamine, triethylamine, triethanolamine, etc.

Among the aforementioned neutralizing agents, from the viewpoint of improving storage stability and substrate-adhesion properties of the resulting ink, preferred are the hydroxides of alkali metals such as sodium hydroxide, etc., and ammonia, and more preferred is sodium hydroxide.

The neutralizing agent is preferably used in the form of an aqueous neutralizing agent solution from the viewpoint of sufficiently and uniformly accelerating the neutralization of the anionic groups of the polymer. From the same viewpoint as described above, the concentration of the aqueous neutralizing agent solution is preferably not less than 3% by mass, more preferably not less than 10% by mass and even more preferably not less than 15% by mass, and is also preferably not more than 30% by mass and more preferably not more than 25% by mass.

The neutralization degree of the anionic groups of the polymer is preferably not less than 30 mol%, more preferably not less than 40 mol% and even more preferably not less than 50 mol%, and is also preferably not more than 300 mol%, more preferably not more than 200 mol% and even more preferably not more than 150 mol%, from the viewpoint of improving storage stability and substrate-adhesion properties of the resulting ink.

The neutralization degree as used herein means the value calculated by dividing a mole equivalent amount of the neutralizing agent by a molar amount of the anionic groups of the polymer.

The weight-average molecular weight of the polymer of the shell portion resin is preferably not less than 6,000, more preferably not less than 8,000 and even more preferably not less than 10,000, and is also preferably not more than 300,000, more preferably not more than 200,000, even more preferably not more than 100,000 and further even more preferably not more than 50,000, from the viewpoint of improving dispersion stability of the resin particles (A).

Meanwhile, the weight-average molecular weight of the polymer may be measured by the method described in Examples below.

Specific examples of commercially available products of the vinyl-based polymers include styrene-acrylic acid copolymers such as "JONCRYL 61", "JONCRYL 67", "JONCRYL 611", "JONCRYL 678", "JONCRYL 680", "JONCRYL 690" and "JONCRYL 819" all available from BASF Japan, Ltd., and polyacrylic acids such as "ARON AC-10SL" available from Toagosei Co., Ltd., and the like.

(Core Portion Resin)

The core portion resin is a resin that contains the constitutional unit derived from the (meth)acrylic acid ester containing a hydrocarbon group having not less than 2 and not more than 18 carbon atoms in an amount of not less than 40% by mass, preferably not less than 70% by mass, more preferably not less than 90% by mass and even more preferably 100% by mass, on the basis of constitutional units constituting the core portion resin, from the viewpoint of improving storage stability and substrate-adhesion properties of the resulting ink.

The hydrocarbon group having not less than 2 and not more than 18 carbon atoms may also contain a hetero atom such as an oxygen atom, a nitrogen atom, etc. The number of carbon atoms in the hydrocarbon group having not less than 2 and not more than 18 carbon atoms is preferably not less than 3 and more preferably not less than 4, and is also preferably not more than 12 and more preferably not more than 8, from the viewpoint of improving substrate-adhesion properties of the resulting ink. In addition, the hydrocarbon group having not less than 2 and not more than 18 carbon atoms is preferably at least one group selected from the group consisting of a benzyl group and a 2-ethylhexyl group.

The core portion resin acts as a focus point of a stress in the respective resin particles (A). Therefore, from the viewpoint of relaxing the stress, the glass transition temperature of the core portion resin is preferably not higher than 80°C, more preferably not higher than 70°C, even more preferably not higher than 60°C and further even more preferably not higher than 50°C.

The acid value of the core portion resin is preferably not more than 50 mgKOH/g, more preferably not more than 30 mgKOH/g, even more preferably not more than 10 mgKOH/g and further even more preferably 0 mgKOH/g from the viewpoint of improving substrate-adhesion properties of the resulting ink.

As the hydrocarbon group having not less than 2 and not more than 18 carbon atoms, preferred are an alkyl group and an aryl group. Examples of the hydrocarbon group having not less than 2 and not more than 18 carbon atoms include an ethyl group, a propyl group, an isopropyl group, a butyl group, an isobutyl group, a *tert*-butyl group, a pentyl group, a hexyl group, a heptyl group, an octyl group, a 2-ethylhexyl group, an octadecyl group, a benzyl group, etc. Among these hydrocarbon groups having not less than 2 and not more than 18 carbon atoms, from the viewpoint of improving substrate-adhesion properties of the resulting ink, preferred is at least one group selected from the group consisting of a butyl group, an isobutyl group, a *tert*-butyl group, a hexyl group, an octyl group, a 2-ethylhexyl group, an octyl group, an octadecyl group and a benzyl group, and more preferred is at least one group selected from the group consisting of a butyl group, an isobutyl group, a *tert*-butyl group, a hexyl group, a 2-ethylhexyl group and a benzyl group.

The (meth)acrylic acid ester is at least one compound selected from the group consisting of an acrylic acid ester and a methacrylic acid ester. Among these compounds, from the viewpoint of improving substrate-adhesion properties of the resulting ink, preferred is an acrylic acid ester.

Specific examples of the (meth)acrylic acid ester containing the hydrocarbon group having not less than 2 and not more than 18 carbon atoms include at least one compound selected from the group consisting of ethyl (meth)acrylate, propyl (meth)acrylate, isopropyl (meth)acrylate, butyl (meth)acrylate, isobutyl (meth)acrylate, pentyl (meth)acrylate, hexyl (meth)acrylate, heptyl (meth)acrylate, octyl (meth)acrylate, 2-ethylhexyl (meth)acrylate, octadecyl (meth)acrylate, benzyl (meth)acrylate and the like. Among these (meth)acrylic acid esters, preferred is at least one compound selected from the group consisting of butyl (meth)acrylate, isobutyl (meth)acrylate, pentyl (meth)acrylate, hexyl (meth)acrylate, heptyl (meth)acrylate, octyl (meth)acrylate, 2-ethylhexyl (meth)acrylate, benzyl (meth)acrylate and the like, and more preferred is at least one compound selected from the group consisting of 2-ethylhexyl (meth)acrylate and benzyl (meth) acrylate.

(Production of Core/Shell-Type Resin Particles (A))

The method of producing the core/shell-type resin particles (A) used in the present invention is not particularly limited. For example, there is preferably used the method in which an emulsion of the shell portion resin is mixed with an aqueous medium, and a monomer for the core portion resin is added to the resulting aqueous dispersion, and the obtained mixture is heated while stirring, and then the reaction is conducted while further adding dropwise a water-soluble polymerization initiator thereto to thereby obtain the core/shell-type resin particles (A).

After initiation of the reaction, the change in hue in a reaction vessel, etc., is observed to confirm formation of a core of the respective particles, and then the reaction is continuously conducted while further adding dropwise the monomer for the core portion resin to the reaction vessel, to thereby obtain the core/shell-type resin particles (A) as the aimed product.

The monomer for production of the core portion resin may be added dropwise to the reaction vessel either directly or in the form of an emulsion previously prepared by dispersing the monomer in an aqueous medium. The shell portion resin acts as a protective colloid in the aqueous medium to stabilize the core (core portion) of the respective particles produced. The emulsion of the core/shell-type resin particles (A) obtained by this method is excellent in printability, since the emulsion has a viscosity close to a Newtonian fluid.

In addition, by appropriately changing the composition of the monomer for the core portion resin in a stepwise manner, it is possible to produce a core portion constituted of a plurality of phases or a core portion whose composition is continuously changed from an innermost core outwardly.

The aqueous medium as used in the aforementioned production method means such a medium in which water has a largest content among components of the medium.

As the water-soluble polymerization initiator, conventionally known polymerization initiators may be used. Specific examples of the water-soluble polymerization initiator include inorganic peroxides such as potassium persulfate, sodium persulfate, ammonium persulfate, hydrogen peroxide, etc., azo-based polymerization initiators such as 2,2-azobis(2-amidinopropane) dihydrochloride, etc., and redox polymerization initiators using a peroxide compound in combination with a reducing agent such as sodium sulfite, etc.

Upon conducting the polymerization reaction, a surfactant may also be used therein. Examples of the surfactant include a nonionic surfactant, an anionic surfactant, a cationic surfactant and the like. Of these surfactants, from the viewpoint of improving dispersion stability of the resin particles (A), preferred is a nonionic surfactant.

The preferred polymerization conditions may vary depending upon the kind of polymerization initiator used, etc. The polymerization temperature is preferably not lower than 50°C and not higher than 90°C, and the polymerization time is preferably not less than 1 hour and not more than 20 hours. In addition, the polymerization is preferably conducted in a nitrogen gas atmosphere or an atmosphere of an inert gas such as argon, etc.

The core/shell-type resin particles (A) are preferably used as such in the form of an emulsion formed by dispersing the resin particles (A) in the medium containing water as a main medium, without removing the solvent used in the polymerization reaction from the emulsion, from the viewpoint of well compounding the core/shell-type resin particles (A) in the aqueous ink.

The mass ratio of the core portion resin (a1) to a resin (a2) corresponding to a shell portion other than the core portion resin [(a1)/(a2)] in the core/shell-type resin particles (A) is not less than 1, preferably not less than 1.1 and more preferably not less than 1.2, and is also not more than 1.35.

The acid value of the core/shell-type resin particles (A) is not less than 50 mgKOH/g and not more than 100 mgKOH/g from the viewpoint of improving storage stability and substrate-adhesion properties of the resulting ink. The acid value is preferably not less than 55 mgKOH/g, more preferably not less than 60 mgKOH/g and even more preferably not less than 65 mgKOH/g, and is also preferably not more than 150 mgKOH/g, more preferably not more than 130 mgKOH/g, even more preferably not more than 110 mgKOH/g and further even more preferably not more than 90 mgKOH/g. The acid value of the core/shell-type resin particles (A) means an acid value of a whole resin portion constituting the core portion and the shell portion.

The average particle size of the core/shell-type resin particles (A) in the emulsion thereof is preferably not less than 10 nm, more preferably not less than 20 nm and even more preferably not less than 40 nm, and is also preferably not more than 150 nm, more preferably not more than 120 nm and even more preferably not more than 100 nm, from the viewpoint of improving storage stability and substrate-adhesion properties of the resulting ink.

The average particle size of the core/shell-type resin particles (A) in the emulsion thereof may be measured by the method described in Examples below.

The solid content of the emulsion of the core/shell-type resin particles (A) is preferably not less than 15% by mass, more preferably not less than 20% by mass and even more preferably not less than 25% by mass, and is also preferably not more than 60% by mass, more preferably not more than 50% by mass and even more preferably not more than 40% by mass, from the viewpoint of well compounding the core/shell-type resin particles (A) in the aqueous ink.

The solid content of the emulsion may be measured by the method described in Examples below.

<Glycol Ether (B)>

The glycol ether (B) is used to plasticize the core/shell-type resin particles (A) for the purpose of improving substrate-adhesion properties of the resulting ink.

The number of carbon atoms of the hydrocarbon group contained in an ether moiety of the glycol ether (B) is not less than 2 and not more than 8 from the viewpoint of more efficiently plasticizing the resin particles (A).

Examples of the hydrocarbon group include a linear or branched alkyl group, an alkenyl group, an aryl group, etc. Among these hydrocarbon groups, preferred are the alkyl group and the aryl group. The number of carbon atoms of the alkyl group is preferably not less than 3 and more preferably not less than 4, and is also preferably not more than 6. Examples of the aryl group include a phenyl group and a benzyl group. Among these aryl groups, preferred is a benzyl group.

The boiling point of the glycol ether (B) is preferably not lower than 110°C, more preferably not lower than 115°C, even more preferably not lower than 120°C and further even more preferably not lower than 130°C, and is also preferably not higher than 290°C, more preferably not higher than 280°C, even more preferably not higher than 275°C, further even more preferably not higher than 260°C and still further even more preferably not higher than 230°C. The boiling point as used herein represents a standard boiling point (i.e., a boiling point under 1 atm). In the case where two or more glycol ethers are used in the glycol ether (B), the boiling point of the aforementioned glycol ether (B) means a weighted mean value of boiling points of the two or more glycol ethers as weighted by contents (% by mass) of the respective glycol ethers.

In addition, the SP value (solubility parameter) of the glycol ether (B) is preferably not less than 18 $(J/cm^3)^{0.5}$, more preferably not less than 19 $(J/cm^3)^{0.5}$ and even more preferably not less than 19.5 $(J/cm^3)^{0.5}$, and is also preferably not more than 23 $(J/cm^3)^{0.5}$, more preferably not more than 22 $(J/cm^3)^{0.5}$ and even more preferably not more than 21 $(J/cm^3)^{0.5}$, from the viewpoint of improving substrate-adhesion properties of the resulting ink.

Examples of the glycol ether (B) include those glycol ethers whose ether moiety contains a hydrocarbon group having not less than 2 and not more than 8 carbon atoms, e.g., alkylene glycol monoalkyl ethers such as monoalkylene glycol monoalkyl ethers, dialkylene glycol monoalkyl ethers, trialkylene glycol monoalkyl ethers, etc., and alkylene glycol dialkyl ethers such as monoalkylene glycol dialkyl ethers, dialkylene glycol dialkyl ethers, etc. Examples of the alkylene glycol in these glycol ethers include ethylene glycol and propylene glycol. Among these alkylene glycols, preferred is ethylene glycol. The glycol ether (B) contains at least one hydrocarbon group having not less than 2 and not more than 8 carbon atoms.

As the alkylene glycol monoalkyl ethers, there may be mentioned at least one compound selected from the group consisting of ethylene glycol monoalkyl ethers such as ethylene glycol monoisopropyl ether (boiling point: 142°C; SP value: 22.3 $(J/cm^3)^{0.5}$) (hereinafter, in this paragraph, "°C" represents a boiling point, and the unit of each SP value is omitted), ethylene glycol monobutyl ether (171°C; SP value: 20.8), ethylene glycol monoisobutyl ether (161°C; SP value: 18.6), ethylene glycol monohexyl ether (208°C; SP value: 20.3), etc.; diethylene glycol monoalkyl ethers such as diethylene glycol monoethyl ether (202°C; SP value: 22.2), diethylene glycol monoisopropyl ether (207°C; SP value: 20.3), diethylene glycol monobutyl ether (231°C), diethylene glycol monoisobutyl ether (220°C; SP value: 19.6), diethylene glycol monohexyl ether (259°C; SP value: 19.8), etc.; triethylene glycol monoalkyl ethers such as triethylene glycol monobutyl ether (271°C; SP value: 20.4), etc.; propylene glycol monoalkyl ethers such as propylene glycol monopropyl ether (150°C), etc.; dipropylene glycol monoalkyl ethers; tripropylene glycol monoalkyl ethers; and ethylene glycol aryl ethers such as ethylene glycol monobenzyl ether (256°C; SP value: 22.4), etc.

As the alkylene glycol dialkyl ethers, there may be mentioned diethylene glycol dialkyl ethers such as diethylene glycol methyl ethyl ether (176°C), diethylene glycol diethyl ether (189°C), etc.

Of these glycol ethers, from the viewpoint of improving drying properties and leveling properties of the resulting ink, preferred are alkylene glycol monoalkyl ethers; more preferred is at least one compound selected from the group consisting of ethylene glycol monoisopropyl ether, ethylene glycol monobutyl ether, ethylene glycol monoisobutyl ether, ethylene glycol hexyl ether, diethylene glycol monoethyl ether, diethylene glycol monoisopropyl ether, diethylene glycol monobutyl ether, diethylene glycol monoisobutyl ether, diethylene glycol monohexyl ether, triethylene glycol monobutyl ether and ethylene glycol monobenzyl ether; even more preferred is at least one compound selected from the group consisting of ethylene glycol monobutyl ether, ethylene glycol monoisobutyl ether, ethylene glycol hexyl ether, diethylene glycol monoethyl ether, diethylene glycol monoisopropyl ether, diethylene glycol monobutyl ether, diethylene glycol monoisobutyl ether, diethylene glycol monohexyl ether, triethylene glycol monobutyl ether and ethylene glycol monobenzyl ether; and further even more preferred is at least one compound selected from the group consisting of ethylene glycol monobutyl ether, ethylene glycol hexyl ether, diethylene glycol monoisobutyl ether, diethylene glycol monohexyl ether, triethylene glycol monobutyl ether and ethylene glycol monobenzyl ether.

The aforementioned glycol ethers may be used alone or in combination of any two or more thereof.

The resin particle dispersion according to the present invention may also contains the other water-soluble organic solvent than the aforementioned glycol ether (B). Examples of the other water-soluble organic solvent include alcohols, divalent or higher-valent polyhydric alcohols such as glycols, pyrrolidones, alkanol amines, etc. Of these other water-soluble organic solvents, preferred are glycols from the viewpoint of improving substrate-adhesion properties of the resulting ink.

Examples of the aforementioned glycols include ethylene glycol, 1,2-propanediol, 1,2-butanediol, 1,2-hexanediol, 1,3-propanediol, 1,3-butanediol, diethylene glycol, etc. Of these glycols, preferred are alkanediols having not less than 3 and not more than 4 carbon atoms, such as 1,2-propanediol, diethylene glycol, etc.

<Pigment>

The resin particle dispersion according to the present invention may also contains a pigment. Examples of the pigment include white pigments such as titanium oxide, etc., as well as black pigments such as carbon blacks, etc., and chromatic color pigments such as azo pigments, diazo pigments, phthalocyanine pigments, quinacridone pigments, isoindolinone pigments, dioxazine pigments, perylene pigments, perinone pigments, thioindigo pigments, anthraquinone pigments, quinophthalone pigments, etc.

The present invention can be effectively applied, in particular, to such a case where a titanium oxide pigment that has been frequently used as pigments for background colors is used in the dispersion, from the viewpoint of improving substrate-adhesion properties of the resulting ink.

(Titanium Oxide)

Examples of a crystal structure of the titanium oxide include a rutile type (tetragonal system) structure, an anatase type (tetragonal system) structure and a brookite type (orthorhombic system) structure. Among the titanium oxides having these crystal structures, from the viewpoint of improving stability of crystals, hiding power and availability of the titanium oxide, the rutile-type titanium oxide (hereinafter also referred to merely as "titanium oxide") is preferably used in the present invention.

The titanium oxide may be produced by either a gas phase method or a liquid phase method. From the viewpoint of facilitating production of the titanium oxide having high crystallinity, the titanium oxide produced by a gas phase method is more preferably used.

The titanium oxide used herein may be in the from of an untreated titanium oxide. However, the titanium oxide is preferably in the from of a surface-treated titanium oxide from the viewpoint of confining photocatalytic activity of the titanium oxide and attaining good dispersibility of the titanium oxide. Examples of the surface treatment of the titanium oxide include a surface treatment with an inorganic material, a surface treatment with an organic material such as a titanium coupling agent and a silane coupling agent, and the like. Among these surface treatments, the surface treatment with an inorganic material is preferred.

As the method for surface-treating the titanium oxide with the inorganic material, there may be mentioned a method for surface-treating the titanium oxide with at least one inorganic material selected from the group consisting of alumina ($Al_2O_3$), silica (SiOs), zinc oxide (ZnO), zirconia (ZrOs) and the like.

The titanium oxide particles thus surface-treated are calcined at a temperature of from 800 to 1000°C, so that it is possible to suppress sintering between the titanium oxide particles and thereby improve flowability and dispersibility of the titanium oxide particles having a secondary particle size.

The particle shape of the titanium oxide is not particularly limited, and may be a granular shape, an acicular shape, etc. The average primary particle size of the titanium oxide is preferably not less than 40 nm, more preferably not less than 100 nm, even more preferably not less than 150 nm and further even more preferably not less than 200 nm in terms of an arithmetic mean of major axis diameters of primary particles of the titanium oxide from the viewpoint of improving whiteness of the titanium oxide, and is also preferably not more than 350 nm, more preferably not more than 500 nm and even more preferably not more than 400 nm in terms of an arithmetic mean of major axis diameters of primary particles of the titanium oxide from the viewpoint of improving hiding power of the titanium oxide.

Meanwhile, the average primary particle size of the titanium oxide is an arithmetic mean of major axis diameters of the primary particles, and more specifically may be measured by the method described in Examples below.

Examples of commercially available products of the rutile-type titanium dioxide include "TIPAQUE R" (tradename) series products, "TIPAQUE CR" (tradename) series products and "TIPAQUE PF" (tradename) series products all available from Ishihara Sangyo Kaisha, Ltd.; "R" (tradename) series products available from Sakai Chemical Industry Co., Ltd.; "JR" (tradename) series products and "MT" (tradename) series products both available from TAYCA Corporation; "KURONOS KR" (tradename) series products available from Titan Kogyo Co., Ltd.; and "TR" (tradename) series products available from Huntsmann Corporation, and the like.

(Titanium Oxide Dispersion)

The titanium oxide is preferably compounded in the form of a titanium oxide dispersion into the resin particle dispersion according to the present invention.

The polymer dispersant used for dispersing the titanium oxide is not particularly limited, and is preferably the same polymer as that of the shell portion resin of the aforementioned core/shell-type resin particles (A), i.e., the polymer containing the constitutional unit derived from the ionic monomer (a), more preferably the polymer further containing at least one constitutional unit selected from the group consisting of the constitutional unit derived from the hydrophobic monomer (b) and the constitutional unit derived from the hydrophilic nonionic monomer (c) in addition to the constitutional unit derived from the ionic monomer (a), and even more preferably the polymer containing the constitutional unit derived from the ionic monomer (a) and the constitutional unit derived from the hydrophilic nonionic monomer (c).

Suitable examples of the preferred polymer dispersant used for dispersing the titanium oxide include those polymers containing, as the component (a), preferably an anionic monomer, more preferably a carboxylic acid monomer and even more preferably at least one monomer selected from the group consisting of acrylic acid and methacrylic acid, and also containing, as the component (c), preferably at least one monomer selected from the group consisting of a polyalkylene glycol (meth)acrylate and an alkoxy polyalkylene glycol (meth)acrylate and more preferably methoxy polyethylene glycol (n = 1 to 30) (meth)acrylate.

In this case, from the viewpoint of improving dispersion stability of the resulting titanium oxide dispersion, the content of the constitutional unit derived from the component (a) in the whole constitutional units of the polymer dispersant is preferably not less than 5% by mass, more preferably not less than 10% by mass and even more preferably not less than 15% by mass, and is also preferably less than 35% by mass, more preferably less than 30% by mass and even more preferably less than 25% by mass.

From the same viewpoint as described above, the content of the constitutional unit derived from the component (c) in the whole constitutional units of the polymer dispersant is preferably not less than 65% by mass, more preferably not less than 70% by mass and even more preferably not less than 75% by mass, and is also preferably less than 95% by mass, more preferably less than 90% by mass and even more preferably less than 85% by mass.

The method for producing the polymer dispersant is the same as the aforementioned method for producing the shell portion resin.

The titanium oxide dispersion may be produced by subjecting a mixture containing the titanium oxide, the polymer dispersant and a water-based medium (hereinafter also referred to merely as a "titanium oxide mixture") to dispersion treatment.

The water-based medium as used herein means a medium containing water as a main component. Examples of an organic solvent as a component other than water in the medium include aliphatic alcohols having 1 to 4 carbon atoms, ketones having 3 to 8 carbon atoms, ethers such as ethyl ether, propyl ether, butyl ether, tetrahydrofuran, etc., esters such as methyl acetate, ethyl acetate, etc., and the like. In the case where the polymer dispersant is synthesized by a solution polymerization method, the solvent used in the solution polymerization method may be directly used as such.

The content of water in the titanium oxide dispersion is preferably not less than 60% by mass and more preferably not less than 70% by mass, and is also preferably not more than 100% by mass, from the viewpoint of improving environmental properties.

In the case where the carboxy groups as a salt-forming group of the polymer dispersant are at least partially neutralized, the pH value of the resulting dispersion is controlled to not less than 7, preferably not less than 7.5 and more preferably not less than 8.5, and is also preferably controlled to not more than 13 and more preferably not more than 11.

The neutralizing agent used above is the same as those described previously. As the neutralizing agent, preferred is an alkali metal hydroxide, and more preferred are aqueous solutions of sodium hydroxide, potassium hydroxide, etc.

(Dispersion Treatment of Titanium Oxide Mixture)

The dispersing method for obtaining the titanium oxide dispersion is not particularly limited. However, it is preferred that the titanium oxide mixture is first subjected to preliminary dispersion treatment, and then further subjected to substantial dispersion treatment by applying a shear stress thereto so as to control an average particle size of the obtained titanium oxide particles to a desired value.

As a means for conducting the preliminary dispersion treatment, there may be used anchor blades, disper blades, etc.

As a means for conducting the substantial dispersion treatment, there may be used kneading machines such as roll mills, kneaders, etc., high-pressure homogenizers such as "MICROFLUIDIZER" available from Microfluidics Corporation, etc., and media-type dispersers such as paint shakers, beads mills, etc. Among these devices, the high-pressure homogenizers are preferably used from the viewpoint of reducing a particle size of the titanium oxide particles. In the case where the substantial dispersion treatment is conducted using the high-pressure homogenizer, the particle size of the pigment can be adjusted to a desired value by controlling the treating pressure and the number of passes through the homogenizer.

The average particle size of the titanium oxide particles in the titanium oxide dispersion is preferably not less than 150 nm, more preferably not less than 180 nm and even more preferably not less than 200 nm, and is also preferably not more than 700 nm, more preferably not more than 600 nm and even more preferably not more than 500 nm, from the viewpoint of improving optical density of the resulting ink upon printing.

The average particle size of the titanium oxide particles in the titanium oxide dispersion may be measured by the method described in Examples below.

The solid content of the titanium oxide dispersion (concentration of non-volatile components in the titanium oxide dispersion) is preferably not less than 20% by mass and more preferably not less than 30% by mass, and is also preferably not more than 70% by mass and more preferably not more than 60% by mass, from the viewpoint of improving dispersion stability of the resulting titanium oxide dispersion.

Meanwhile, the solid content of the dispersion of the pigment such as titanium oxide, etc., may be measured by the method described in Examples below.

<Contents of Respective Components in Resin Particle Dispersion>

The contents of the respective components in the resin particle dispersion according to the present invention are as follows from the viewpoint of improving storage stability and substrate-adhesion properties of the resulting ink.

The content of the core/shell-type resin particles (A) in the resin particle dispersion is preferably not less than 5% by mass, more preferably not less than 10% by mass and even more preferably not less than 15% by mass, and is also preferably not more than 50% by mass, more preferably not more than 40% by mass and even more preferably not more than 35% by mass.

The content of the glycol ether (B) in the resin particle dispersion is not less than 2.8% by mass, preferably not less than 3% by mass, more preferably not less than 3.5% by mass, even more preferably not less than 4.2% by mass and further even more preferably not less than 5% by mass, and is also preferably not more than 30% by mass, more preferably not more than 20% by mass, even more preferably not more than 10% by mass and further even more preferably not more than 7% by mass.

In the case where the water-soluble organic solvent other than the glycol ether (B) is used, the content of the water-soluble organic solvent in the resin particle dispersion is preferably not more than 15% by mass, more preferably not more than 10% by mass and even more preferably not more than 5% by mass, and is also preferably not less than 0.2% by mass, more preferably not less than 0.5% by mass and even more preferably not less than 0.8% by mass.

The content of the pigment in the resin particle dispersion is preferably not less than 2% by mass, more preferably not less than 4% by mass and even more preferably not less than 6% by mass, and is also preferably not more than 50% by mass, more preferably not more than 40% by mass and even more preferably not more than 30% by mass, from the viewpoint of improving optical density of the resulting ink upon printing.

The mass ratio of the pigment to the core/shell-type resin particles (A) [pigment/core/shell-type resin particles (A)] is preferably not less than 0.3, more preferably not less than 0.5 and even more preferably not less than 0.8, and is also preferably not more than 4, more preferably not more than 3 and even more preferably not more than 2, from the viewpoint of improving optical density of the resulting ink upon printing.

The content of water in the resin particle dispersion is preferably not less than 30% by mass, more preferably not less than 40% by mass, even more preferably not less than 45% by mass and further even more preferably not less than 50% by mass, and is also preferably not more than 80% by mass, more preferably not more than 75% by mass and even more preferably not more than 70% by mass, from the viewpoint of reducing environmental burdens.

The mass ratio of the content of water to the content of the glycol ether (B) [water/(B)] in the resin particle dispersion is preferably not less than 0.5, more preferably not less than 1, even more preferably not less than 1.2 and further even more preferably not less than 2.4, and is also preferably not more than 100, more preferably not more than 40, even more preferably not more than 15 and further even more preferably not more than 12.5.

The pigment-containing resin particle dispersion may be directly used as an ink.

[Aqueous Ink]

The resin particle dispersion of the present invention may be used as an aqueous ink such as an ink for ink-jet printing, an ink for flexo printing, etc., and is preferably used as an aqueous ink for gravure printing.

The aqueous ink for gravure printing may be prepared by further mixing the resin particle dispersion with various additives such as a surfactant, an organic solvent other than the glycol ether (B), a humectant, a wetting agent, a wetting penetrant, a dispersant, a viscosity controller, a defoaming agent, an antiseptic agent, a mildew-proof agent, a rust preventive, etc., if required.

The contents of the core/shell-type resin particles (A), the glycol ether (B), the pigment and water in the aqueous ink for gravure printing are basically identical to the contents of these components in the aforementioned resin particle dispersion.

The content of water in the aqueous ink for gravure printing is preferably not less than 20% by mass, more preferably not less than 30% by mass and even more preferably not less than 40% by mass, and is also preferably not more than 80% by mass, more preferably not more than 75% by mass and even more preferably not more than 65% by mass.

The mass ratio of the content of water to the content of the glycol ether (B) [water/(B)] in the aqueous ink is preferably not less than 0.5, more preferably not less than 1, even more preferably not less than 2 and further even more preferably not less than 2.3, and is also preferably not more than 100, more preferably not more than 65 and even more preferably not more than 25.

Examples of the surfactant used in the present invention include an anionic surfactant, a nonionic surfactant, an amphoteric surfactant, etc. Among these surfactants, preferred is a nonionic surfactant, and more preferred is an acetylene glycol-based surfactant.

As the acetylene glycol-based surfactant, there may be mentioned at least one acetylene glycol selected from the group consisting of 2,4,7,9-tetramethyl-5-decyne-4,7-diol, 3,6-dimethyl-4-octyne-3,6-diol and 2,5-dimethyl-3-hexyne-2,5-diol, and ethyleneoxide adducts of these acetylene glycols. Of these acetylene glycol-based surfactants, preferred is 2,4, 7,9-tetramethyl-5-decyne-4, 7-diol.

Specific examples of commercially available products of the acetylene glycol-based surfactant include "SURFYNOL 104" (2,4,7,9-tetramethyl-5-decyne-4,7-diol; HLB: 3.0), "SURFYNOL 104E" (a 50% ethylene glycol-diluted solution of 2,4,7,9-tetramethyl-5-decyne-4,7-diol), "SURFYNOL 104PG-50" (a 50% propylene glycol-diluted solution of 2,4,7,9-tetramethyl-5-decyne-4,7-diol) and "SURFYNOL 420" (a 1.3 mol (on the average) EO adduct of 2,4,7,9-tetramethyl-5-decyne-4,7-diol; HLB: 4.7) all available from Air Products & Chemicals, Inc., and "ACETYLENOL E13T" (average molar number of addition of EO: 1.3; HLB: 4.7) available from Kawaken Fine Chemicals Co., Ltd., and the like.

The pH value of the aqueous ink for gravure printing is preferably not less than 5.5, more preferably not less than 6.0 and even more preferably not less than 6.5 from the viewpoint of improving storage stability of the resulting ink, and is also preferably not more than 11.0, more preferably not more than 10.0 and even more preferably not more than 9.5 from the viewpoint of suppressing skin irritation.

Examples of a printing substrate to which the aqueous ink for gravure printing can be applied include a high-water absorbing plain paper, a low-water absorbing coated paper and a resin film. Specific examples of the coated paper include a versatile glossy coated paper, a multi-color foam glossy coated paper, etc. Specific examples of the resin film include a polyester film, a polyvinyl chloride film, a polypropylene film, a polyethylene film, etc.

The aqueous ink for gravure printing according to the present invention is preferably applied to a printing method using the resin film as the printing substrate in view of excellent substrate-adhesion properties thereof.

The resin film may be in the form of any of a biaxially oriented film, a monoaxially oriented film and a non-oriented film. Among these resin films, more preferred are a polyester film and an oriented polypropylene film, and even more preferred are a polyethylene terephthalate (PET) film subjected to corona discharge treatment and a biaxially oriented polypropylene (OPP) film subjected to corona discharge treatment.

EXAMPLES

In the following Production Examples, Examples and Comparative Examples, the "part(s)" and "%" indicate "part(s) by mass" and "% by mass", respectively, unless otherwise specified. Meanwhile, various properties were measured and evaluated by the following methods. Examples 1 to 8 and 11 to 13 are not part of the invention.

<Methods of Measuring Properties>

(1) Measurement of Weight-Average Molecular Weight of Polymer

The weight-average molecular weight of the polymer was measured by gel chromatography [GPC apparatus: "HLC-8120GPC" available from Tosoh Corporation; columns: "TSK-GEL, $\alpha$-M" x 2 available from Tosoh Corporation; flow rate: 1 mL/min)] using a solution prepared by dissolving phosphoric acid (guaranteed reagent) available from FUJIFILM Wako Pure Chemical Corporation and lithium bromide (reagent) available from Tokyo Chemical Industry Co., Ltd., in N,N-dimethylformamide (for high-performance liquid chromatography) available from FUJIFILM Wako Pure Chemical Corporation such that concentrations of phosphoric acid and lithium bromide in the resulting solution were 60 mmol/L and 50 mmol/L, respectively, as an eluent, and using monodisperse polystyrenes having known molecular weights as a reference standard substance.

(2-1) Measurement of Average Primary Particle Size of Titanium Oxide

The average primary particle size of the titanium oxide was determined by the following method. That is, using a transmission electron microscope "JEM-2100" available form JEOL Ltd., 500 primary particles of the titanium oxide were extracted by image analysis to measure their particle sizes and calculate an average value of the thus measured particles sizes as a number-average particle size thereof. Meanwhile, in the case where the respective titanium oxide particles had a major axis diameter and a minor axis diameter, the average primary particle size of the titanium oxide was calculated by using the major axis diameters thereof.

(2-2) Measurement of Average Particle Size of Particles in Titanium Oxide Dispersion

Using a laser diffraction/scattering particle size distribution measuring apparatus "LA950" available from HORIBA Ltd., the titanium oxide dispersion was irradiated with laser rays for 1 minute at a circulating rate of 5 and an ultrasonic wave 3 under such a condition that a refractive index of the titanium oxide was 2.75, and water having a refractive index of 1.333 was used as a dispersing medium thereof, followed by measuring an average particle size of the particles in the titanium oxide dispersion. At this time, the value of the volume median particle size ($D_{50}$) of the particles measured was defined as the average particle size of the particles dispersed in the titanium oxide dispersion.

(3) Measurement of Average Particle Size of Core/Shell-Type Resin Particles in Emulsion

The emulsion of the core/shell-type resin particles was subjected to cumulant analysis using a laser particle analyzing system "ELSZ-1000" available from Otsuka Electrics Co., Ltd. The emulsion to be measured was diluted with water so as to adjust a concentration of the emulsion to about $5 \times 10^{-3}$% by mass in terms of a solid content thereof. The measurement was conducted under the conditions including a temperature of 25°C, an angle between incident light and detector of 165° and a cumulative number of 100 times, and a refractive index of water (1.333) was input to the analyzing system as a refractive index of the dispersing medium. The thus determined cumulant average particle size was defined as the average particle size of the particles in the emulsion.

(4-1) Measurement of Solid Content of Emulsion

Using an infrared moisture meter "FD-230" (tradename) available from Kett Electric Laboratory, 5 g of an aqueous dispersion liquid to be measured was dried at a drying temperature of 150°C under a measuring mode 96 (monitoring time: 2.5 minutes/variation range: 0.05%) to measure a water content on a wet base (% by mass) of the aqueous dispersion liquid. The solid content of the aqueous dispersion liquid was calculated according to the following formula:

$$\text{Solid Content (\% by mass)} = 100 - \text{Water Content on Wet Base (\% by mass)}$$
$$\text{of Aqueous Dispersion Liquid}$$

(4-2) Measurement of Solid Contents of Polymer Solution and Pigment Dispersion

Sodium sulfate dried to constant weight in a desiccator was weighed in an amount of 10.0 g and charged into a 30 mL polypropylene container ($\phi$: 40 mm; height: 30 mm), and 1.0 g of a sample to be measured was added to the container. The contents of the container were mixed and then accurately weighed. The resulting mixture was maintained in the container at 105°C for 2 hours to remove volatile components therefrom, and further allowed to stand in a desiccator for 15 minutes to measure a mass thereof. The mass of the sample after removing the volatile components therefrom was regarded as a mass of solids in the sample. The solid content of the sample was calculated by dividing the mass of the solids by the mass of the sample initially added.

<Evaluation Methods>

(1) Evaluation of Storage Stability

The aqueous ink (resin particle dispersion) was allowed to stand at 40°C for one week to evaluate the change of the ink over time. More specifically, 50 mL of the ink was filled and hermetically sealed within a glass bottle to observe whether any phase separation and gelation occurred or not and evaluate storage stability thereof according to the following ratings.

(Evaluation Ratings)

  A: No change of the ink was observed.
  B: The ink suffered from phase separation, but returned to its initial state when shaken by hand.
  C: The ink suffered from phase separation and gelation, and could not return to its initial state even when shaken by hand.

When the evaluation rating was Rank A or B, the ink was usable in the practical applications.

(2) Evaluation of Substrate-Adhesion Properties

(2-1) Preparation of Gravure Printed Material

Using a gravure proof press "K PRINTING PROOFER" available from RK Print Coat Instruments Ltd., and using a honeycomb having 250 L and a depth of 10 $\mu$m as a printing plate, the aqueous ink was printed on a corona-treated OPP film "FOS-AQ, #50" available from Futamura Chemical Co., Ltd., at a printing speed of 15 m/min, and then dried at 60°C for 1 hour, thereby obtaining a gravure printed material.

(2-2) Tape Peel Test

Under the environmental condition of 25°C, a cellophane tape having a width of 18 mm available from Nichiban Co., Ltd., was attached onto a 100% density portion of printed images formed on the gravure printed material, and strongly pressed and adhered thereonto by a palm of hand. Then, the tape was peeled off in the direction perpendicular to the printed material, and the surface of the printed material was observed to measure an area ratio of the printed image peeled off together with the tape and evaluate substrate-adhesion properties of the ink from the thus measured area ratio according to the following evaluation ratings.

(Evaluation Ratings)

  A: No peeling of the printed image portion occurred.

B: Slight peeling of the printed image portion occurred (less than 10%).

C: Some peeling of the printed image portion occurred (not less than 10% and less than 30%).

D: Peeling of the printed image portion occurred (not less than 30% and less than 40%).

E: Severe peeling of the printed image portion occurred (not less than 40%).

When the evaluation rating is Rank A, B, C or D, the ink was usable in the applications in which the printed material suffered from no rubbing, and when the evaluation rating is Rank A or B, the ink was usable in the practical applications.

Production Example 1 (Production of Polymer Dispersant for Dispersing Titanium Oxide)

A 2 L-capacity glass reaction vessel equipped with dropping funnels was charged with 182 g of water, and the water in the flask was heated to 80°C in a nitrogen atmosphere.

Then, in the nitrogen atmosphere, three dropping solutions, i.e., a monomer solution containing 314.1 g of methoxy polyethylene glycol monomethacrylate "NK ESTER M-230G" (tradename; average molar number of addition of ethyleneoxide (EO): n = 23) available from Shin-Nakamura Chemical Co., Ltd., and 69.5 g of methacrylic acid available from FUJIFILM Wako Pure Chemical Corporation as a dropping solution 1, 21.1 g of a 15%-conc. 2-mercaptoethanol aqueous solution available from TOYOBO Co., Ltd., as a dropping solution 2, and 84.1 g of a 6%-conc. ammonium persulfate aqueous solution available from FUJIFILM Wako Pure Chemical Corporation as a dropping solution 3, were respectively gradually added dropwise at the same time into the reaction vessel over 90 minutes. After completion of the dropwise addition, the resulting mixed solution was aged at 80°C for 1 hour.

Thereafter, the resulting reaction solution was cooled to 40°C, and then 26.9 g of a 48%-conc. NaOH aqueous solution available from FUJIFILM Wako Pure Chemical Corporation was added thereto, and then 484.3 g of water was added to the resulting reaction mixture to adjust a solid content thereof to 40%, thereby obtaining a solution of a polymer dispersant (weight-average molecular weight of the polymer: 24,000).

Production Example 2 (Production of Titanium Oxide Dispersion)

A 1000 mL-capacity polyethylene bottle was charged with a solution prepared by mixing and dissolving 6 g of the polymer dispersion obtained in Production Example 1 in 2 g of ion-exchanged water, and further charged with 120 g of titanium dioxide "CR-80" (rutile-type; Al/Si-treated titanium oxide; average primary particle size: 250 nm) available from Ishihara Sangyo Kaisha, Ltd., and 88 g of ion-exchanged water. Furthermore, 1476 g of 2 mm$\phi$ zirconia beads were added to the polyethylene bottle, and the contents of the polyethylene bottle were subjected to dispersion treatment using a bench top-type pot mill pedestal available from AS ONE Corporation at 250 rpm for 10 hours.

After completion of the dispersion treatment, the resulting dispersion was filtered through a mesh filter to remove the zirconia beads from the dispersion, and water was added thereto to suitably control a solid content of the dispersion, thereby obtaining a titanium oxide dispersion containing titanium oxide particles having an average particle size of 325 nm (solid content: 50%).

Production Example 3 (Production of Solution of Shell Polymer P1 for Core/Shell-Type Resin Particles)

Acrylic acid (reagent) available from FUJIFILM Wako Pure Chemical Corporation and styrene (reagent) available from FUJIFILM Wako Pure Chemical Corporation were mixed with each other in amounts of 24.2 parts and 75.8 parts, respectively, to prepare a monomer mixture solution. Five parts of methyl ethyl ketone (MEK) and 2.5 parts of 3-mercaptopropionic acid as a polymerization chain transfer agent as well as 10% of the monomer mixture solution prepared above were charged into a reaction vessel and mixed with each other, and then an inside atmosphere of the reaction vessel was fully replaced with nitrogen gas.

On the other hand, a mixed solution prepared by mixing remaining 90% of the aforementioned monomer mixture solution, 2.25 parts of the aforementioned polymerization chain transfer agent, 75 parts of MEK and 2.0 parts of an azo-based radical polymerization initiator "V-501" (tradename; 4,4'-azobis(4-cyanovaleric acid)) available from FUJIFILM Wako Pure Chemical Corporation was charged into a dropping funnel. In a nitrogen atmosphere, the monomer mixture solution in the reaction vessel was heated to 77°C while stirring, and then the mixed solution in the dropping funnel was added dropwise to the reaction vessel over 5 hours. After completion of the dropwise addition, a solution prepared by dissolving 0.5 part of the aforementioned polymerization initiator in 5 parts of MEK was added to the reaction vessel, and the resulting reaction solution was further reacted at 77°C for 2 hours, and then MEK was finally added to the reaction vessel such that a concentration of solid components in the resulting reaction solution was adjusted to 55% to thereby obtain a solution of a shell polymer P1. The acid value and weight-average molecular weight of the polymer P1 were 180 mgKOH/g and 16,000, respectively.

Production Example 4 (Emulsification of Shell Polymer P1: EM1)

A 3000 mL separable flask was charged with 530 g of the polymer P1 solution and 62.5 g of MEK. While stirring the contents of the flask using a stirring blade (at 200 rpm), 16.1 g of a 5N sodium hydroxide aqueous solution was added dropwise to the flask, and then 1389 g of ion-exchanged water was added dropwise to the flask at a rate of 10 mL/min. Thereafter, the solvent and water were removed from the resulting reaction solution using an evaporator to thereby obtain an emulsion EM1 having an average particle size of 15 nm and a resin solid content of 20% (acid value: 180 mgKOH/g; neutralization degree: 70%).

Production Example 5 (Production of Solution of Shell Polymer P2 for Core/Shell-Type Resin Particles)

Acrylic acid (reagent) available from FUJIFILM Wako Pure Chemical Corporation and styrene (reagent) available from FUJIFILM Wako Pure Chemical Corporation were mixed with each other in amounts of 17.5 parts and 82.5 parts, respectively, to prepare a monomer mixture solution. Five parts of methyl ethyl ketone (MEK) and 2.5 parts of 3-mercaptopropionic acid as a polymerization chain transfer agent as well as 10% of the monomer mixture solution prepared above were charged into a reaction vessel and mixed with each other, and then an inside atmosphere of the reaction vessel was fully replaced with nitrogen gas.
On the other hand, a mixed solution prepared by mixing remaining 90% of the aforementioned monomer mixture solution, 2.25 parts of the aforementioned polymerization chain transfer agent, 75 parts of MEK and 2.0 parts of an azo-based radical polymerization initiator "V-501" (tradename; 4,4'-azobis(4-cyanovaleric acid)) available from FUJIFILM Wako Pure Chemical Corporation was charged into a dropping funnel. In a nitrogen atmosphere, the monomer mixture solution in the reaction vessel was heated to 77°C while stirring, and then the mixed solution in the dropping funnel was added dropwise to the reaction vessel over 5 hours. After completion of the dropwise addition, a solution prepared by dissolving 0.5 part of the aforementioned polymerization initiator in 5 parts of MEK was added to the reaction vessel, and the resulting reaction solution was further reacted at 77°C for 2 hours, and then MEK was finally added to the reaction vessel such that a concentration of solid components in the resulting reaction solution was adjusted to 55% to thereby obtain a solution of a shell polymer P2. The acid value and weight-average molecular weight of the polymer P2 were 130 mgKOH/g and 15,500, respectively.

Production Example 6 (Emulsification of Shell Polymer P2: EM2)

A 3000 mL separable flask was charged with 530 g of the polymer P2 solution and 62.5 g of MEK. While stirring the contents of the flask using a stirring blade (at 200 rpm), 14.4 g of a 5N sodium hydroxide aqueous solution was added dropwise to the flask, and then 1404 g of ion-exchanged water was added dropwise to the flask at a rate of 10 mL/min. Thereafter, the solvent and water were removed from the resulting reaction solution using an evaporator to thereby obtain an emulsion EM2 having an average particle size of 15 nm and a resin solid content of 20% (acid value: 130 mgKOH/g; neutralization degree: 90%).

Production Example 7 (Emulsification of "JONCRYL C3000": EM3)

A 1000 mL separable flask was charged with 100.0 g of a styrene-acrylic acid copolymer "JONCRYL JDX-C3000" (weight-average molecular weight: 10000; acid value: 85 mgKOH/g) available from BASF, 364.0 g of ion-exchanged water and 35.9 g of a 5N sodium hydroxide aqueous solution, and the contents of the flask were stirred (at 200 rpm) at 90°C for 5 hours to thereby obtain an emulsion EM3 having an average particle size of 15 nm and a resin solid content of 20% (acid value: 85 mgKOH/g; neutralization degree: 100%).

Production Example 8 (Emulsification of "JONCRYL 68": EM4)

A 1000 mL separable flask was charged with 100.0 g of a styrene-acrylic acid copolymer "JONCRYL 68" (weight-average molecular weight: 12000; acid value: 195 mgKOH/g) available from BASF, 338.2 g of ion-exchanged water and 61.8 g of a 5N sodium hydroxide aqueous solution, and the contents of the flask were stirred (at 200 rpm) at 90°C for 5 hours to thereby obtain an emulsion EM4 having an average particle size of 25 nm and a resin solid content of 20% (acid value: 195 mgKOH/g; neutralization degree: 75%).

Production Example 9 (Emulsification of "JONCRYL 67": EM5)

A 1000 mL separable flask was charged with 100.0 g of a styrene-acrylic acid copolymer "JONCRYL 67" (weight-average molecular weight: 12500; acid value: 213 mgKOH/g) available from BASF, 340.9 g of ion-exchanged water and 59.1 g of a 5N sodium hydroxide aqueous solution, and the contents of the flask were stirred (at 200 rpm) at 90°C for 5 hours to thereby obtain an emulsion EM5 having an average particle size of 20 nm and a resin solid content of 20% (acid value: 213 mgKOH/g; neutralization degree: 65%).

Production Example 10 (Emulsification of "JONCRYL 690": EM6)

A 1000 mL separable flask was charged with 100.0 g of a styrene-acrylic acid copolymer "JONCRYL 690" (weight-average molecular weight: 16500; acid value: 240 mgKOH/g) available from BASF, 339.0 g of ion-exchanged water and 60.9 g of a 5N sodium hydroxide aqueous solution, and the contents of the flask were stirred (at 200 rpm) at 90°C for 5 hours to thereby obtain an emulsion EM6 having an average particle size of 15 nm and a resin solid content of 20% (acid value: 240 mgKOH/g; neutralization degree: 60%).

Production Example 11 (Emulsification of Mixture of JONCRYL C3000/690: EM7)

A 1000 mL separable flask was charged with 48.4 g of "JONCRYL JDX-C3000", 51.6 g of "JONCRYL 690", 353.0 g of ion-exchanged water and 47.4 g of a 5N sodium hydroxide aqueous solution, and the contents of the flask were stirred (at 200 rpm) at 90°C for 5 hours to thereby obtain an emulsion EM7 having an average particle size of 85 nm and a resin solid content of 20% (acid value: 160 mgKOH/g; neutralization degree: 70%).

Example 1 (representative)

(1) Production of Emulsion of Core/Shell-Type Resin Particles

A 1000 mL separable flask was charged with 300 g of the emulsion EM1 obtained in Production Example 4 and 108.9 g of ion-exchanged water. While stirring the contents of the flask (at 100 rpm), 87.6 g of 2-ethylhexyl methacrylate as a monomer for a core portion resin available from FUJIFILM Wako Pure Chemical Corporation was charged thereto. The contents of the flask were then heated to 75°C while stirring.
Then, 22.5 g of a 4%-conc. aqueous solution of potassium persulfate available from FUJIFILM Wako Pure Chemical Corporation was gradually added dropwise into the flask over 90 minutes. After completion of the dropwise addition, the resulting reaction solution was aged at 80°C for 1 hour. Thereafter, the resulting reaction solution was cooled to room temperature, thereby obtaining an emulsion of core/shell-type resin particles having a solid content of 30%.

(2) Production of Aqueous Ink

The emulsion of the core/shell-type resin particles (solid content: 30%) obtained in the above item (1) and the titanium oxide dispersion (solid content: 50%) obtained in Production Example 2 were used in amounts of 33.3% and 44.4%, respectively, and mixed with 3% of diethylene glycol monoisobutyl ether, 1% of 1,2-propanediol, 0.5% of a thickening agent "ADEKANOL UH-420" available from ADEKA Corporation, 1% of an acetylene glycol-based surfactant "SURFYNOL 420" (a 1.3 mol ethyleneoxide adduct of 2,4,7,9-tetramethyl-5-decyne-4,7-diol) available from Air Products & Chemicals, Inc., and water such that a concentration of titanium oxide in the resulting ink was 20% by mass, thereby obtaining an aqueous ink in the form of a resin particle dispersion. The content of water in the thus obtained aqueous ink was 61% by mass, and the mass ratio of the content of water to the content of the diethylene glycol monoisobutyl ether (B) [water/(B)] in the aqueous ink was 15.

(3) Evaluation of Storage Stability and Substrate-Adhesion Properties

The storage stability and substrate-adhesion properties of the aqueous ink were evaluated by the aforementioned methods. The results are shown in Table 1.

Examples 2 to 8 (representative) and Comparative Example 1

The same procedure as in Example 1 was repeated except that 2-ethylhexyl methacrylate as the monomer for the core portion resin was replaced with the respective compounds shown in Table 1, thereby obtaining emulsions of core/shell-type resin particles having a solid content of 30%.

Examples 9 to 10 and 14 to 16, Examples 11 to 13 (representative) and Comparative Examples 2 to 4

The same procedure as in Example 1 was repeated except that the emulsion EM1 used in Example 1 as well as the amount thereof were changed to those shown in Table 1, and the amount of 2-ethylhexyl methacrylate used was changed to those amounts shown in Table 1, thereby obtaining emulsions of core/shell-type resin particles having a solid content of 30%.

TABLE 1-1

| | | Examples | | | | | | | | | | | | | | | | Comparative Examples | | | |
|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 1 | 2 | 3 | 4 |
| Core portion (a1) monomer (part(s)) | 2-Ethylhexyl methacrylate | 60 | | | | | | | | 50 | 50 | 67 | 62 | 59 | 56.5 | 52 | 50 | | 45 | 46 | 75 |
| | Butyl acrylate | | 60 | | | | | | | | | | | | | | | | | | |
| | Isobutyl acrylate | | | 60 | | | | | | | | | | | | | | | | | |
| | Benzyl acrylate | | | | 60 | | | | | | | | | | | | | | | | |
| | *tert*-Butyl acrylate | | | | | 60 | | | | | | | | | | | | | | | |
| | Butyl methacrylate | | | | | | 60 | | | | | | | | | | | | | | |
| | Octadecyl acrylate | | | | | | | 60 | | | | | | | | | | | | | |
| | Isobutyl methacrylate | | | | | | | | 60 | | | | | | | | | | | | |
| | Methyl methacrylate | | | | | | | | | | | | | | | | | 60 | | | |
| Shell portion (a2) polymer (part(s)) | EM1: Polymer P1 (acid value: 180) | 40 | 40 | 40 | 40 | 40 | 40 | 40 | 40 | | 50 | | | | 43.5 | | | 40 | | | |
| | EM2 Polymer P2 (acid value: 130) | | | | | | | | | | | | | | | | 50 | | | | |
| | EM3: JONCRYL C3000 (acid value: 85) | | | | | | | | | | | | | | | | | | | 54 | |
| | EM4: JONCRYL 68 (acid value: 195) | | | | | | | | | 50 | | | | 41 | | | | | | | |
| | EM5: JONCRYL 67 (acid value: 213) | | | | | | | | | | | | 38 | | | | | | | | |
| | EM6: JONCRYL 690 (acid value: 240) | | | | | | | | | | | 33 | | | | | | | 55 | | 25 |
| | EM7: C3000/690 (acid value: 160) | | | | | | | | | | | | | | | 48 | | | | | |

EP 3 733 739 B1

## TABLE 1-2

| | | Examples | | | | | | | | | | | | | | | | Comparative Examples | | | |
|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 1 | 2 | 3 | 4 |
| Properties of core/shell-type resin particles (A), etc. | Mass ratio [a1/a2] | 1.5 | 1.5 | 1.5 | 1.5 | 1.5 | 1.5 | 1.5 | 1.5 | 1 | 1 | 2 | 1.6 | 1.4 | 1.3 | 1.1 | 1 | 1.5 | 0.8 | 0.9 | 3 |
| | Acid value of resin particles (A)** | 72 | 72 | 72 | 72 | 72 | 72 | 72 | 72 | 98 | 90 | 80 | 80 | 80 | 78 | 77 | 65 | 72 | 132 | 46 | 45 |
| | Average particle size (nm)* | 60 | 55 | 45 | 55 | 50 | 50 | 45 | 80 | 45 | 50 | 65 | 55 | 45 | 60 | 50 | 60 | 60 | 50 | 45 | 95 |
| | Solid content of emulsion (%) | 30 | 30 | 30 | 30 | 30 | 30 | 30 | 30 | 30 | 30 | 30 | 30 | 30 | 30 | 30 | 30 | 30 | 30 | 30 | 30 |
| Properties of ink | Storage stability | A | A | A | A | A | A | A | A | A | A | A | A | A | A | A | B | A | A | C | A |
| | Substrate-adhesion properties | B | B | B | A | B | B | C | D | C | B | B | B | B | A | B | B | E | E | B | E |

Note *: Average particle size of core/shell-type resin particles (A)

**: Unit of acid value: mgKOH/g

EP 3 733 739 B1

Examples 17 to 20 and Comparative Examples 5 and 6

The same procedure as in Example 14 was repeated except that the amounts of 3% of the diethylene glycol monoisobutyl ether and 1% of the 1,2-propanediol used in the aqueous ink were respectively changed to those amounts shown in Table 2. The results are shown in Table 2.

TABLE 2-1

| | | Comparative Examples | | Examples | | | |
|---|---|---|---|---|---|---|---|
| | | 5 | 6 | 17 | 18 | 19 | 20 |
| Core portion (a1) monomer (part(s)) | 2-Ethylhexyl methacrylate | 56.5 | 56.5 | 56.5 | 56.5 | 56.5 | 56.5 |
| Shell portion (a2) polymer (part(s)) | EM1: Polymer P1 (acid value: 180 mgKOH/g) | 43.5 | 43.5 | 43.5 | 43.5 | 43.5 | 43.5 |
| Properties of core/shell-type resin particles (A), etc. | Mass ratio [al/a2] | 1.3 | 1.3 | 1.3 | 1.3 | 1.3 | 1.3 |
| | Acid value of resin particles (A) (mgKOH/g) | 78.3 | 78.3 | 78.3 | 78.3 | 78.3 | 78.3 |
| | Average particle size (nm)* | 50 | 55 | 55 | 50 | 45 | 50 |
| | Solid content of emulsion (%) | 30 | 30 | 30 | 30 | 30 | 30 |
| Composition of resin particle dispersion (%) | Core/shell-type resin particles (A) | 20.3 | 18.8 | 18.8 | 18.8 | 18.5 | 18.5 |
| | Diethylene glycol monoisobutyl ether as glycol ether (B) | 0 | 1.9 | 5.7 | 9.4 | 18.5 | 37.0 |
| | Content of water in dispersion (%) | 79.7 | 79.3 | 75.5 | 71.8 | 63.0 | 44.5 |
| | Mass ratio [water/(B)] | - | 41.7 | 13.2 | 7.6 | 3.4 | 1.2 |
| Note *: Average particle size of core/shell-type resin particles (A) | | | | | | | |

TABLE 2-2

| | | Comparative Examples | | Examples | | | |
|---|---|---|---|---|---|---|---|
| | | 5 | 6 | 17 | is | 19 | 20 |
| Ink composition (100 parts in total) | Emulsion of core/shell-type resin particles (A) | 33.3 | 33.3 | 33.3 | 33.3 | 33.3 | 33.3 |
| | Pigment (titanium oxide; solid content: 50%) | 44.4 | 44.4 | 44.4 | 44.4 | 44.4 | 44.4 |
| | Diethylene glycol monoisobutyl ether as glycol ether (B) | 0 | 1.0 | 3 | 5 | 10 | 20 |
| | 1,2-Propanediol | 5 | 1 | 1 | 1 | 0 | 0 |
| | Thickening agent (UH-420) | 0.5 | 0.5 | 0.5 | 0.5 | 0.65 | 1 |
| | Acetylene glycol-based surfactant | 1 | 1 | 1 | 1 | 1 | 1 |
| | Water | 15.8 | 18.8 | 16.8 | 14.8 | 10.8 | 0.8 |
| | Content of water in ink (%) | 61.3 | 64.3 | 62.3 | 60.3 | 56.3 | 46.3 |
| | Mass ratio [water/(B)] | - | 64.3 | 20.8 | 12.1 | 5.6 | 2.3 |

(continued)

| | | Comparative Examples | | Examples | | | |
|---|---|---|---|---|---|---|---|
| | | 5 | 6 | 17 | is | 19 | 20 |
| Properties of ink | Storage stability | C | A | A | A | A | A |
| | Substrate-adhesion properties | E | E | C | A | A | B |

Examples 21 to 30 and Comparative Examples 7 to 15

The same procedure as in Example 14 was repeated except that 3% of the diethylene glycol monoisobutyl ether and 1% of the 1,2-propanediol used in the aqueous ink were changed to 5% of the respective glycol ethers (B), etc., shown in Table 3. The results are shown in Table 3. The content of water in the resulting respective aqueous inks was 61.5% by mass, and the mass ratio of the content of water to the content of the respective glycol ethers (B) [water/(B)] in the resulting respective aqueous inks was 12.3.

In addition, the list of the boiling points and SP values of the solvents such as the respective glycol ethers used are shown in Table 4.

TABLE 3-1

| | | Examples | | | | | | | | | |
|---|---|---|---|---|---|---|---|---|---|---|---|
| | | 21 | 22 | 23 | 24 | 25 | 26 | 27 | 28 | 29 | 30 |
| Core portion (a1) | 2-Ethylhexyl methacrylate | 56.5 | 56.5 | 56.5 | 56.5 | 56.5 | 56.5 | 56.5 | 56.5 | 56.5 | 56.5 |
| Shell portion (a2) | EM1: Polymer P1 (neutralization: 70%) | 43.5 | 43.5 | 43.5 | 43.5 | 43.5 | 43.5 | 43.5 | 43.5 | 43.5 | 43.5 |
| Properties of core/shell-type resin particles (A) | Mass ratio [a1/a2] | 1.3 | 1.3 | 1.3 | 1.3 | 1.3 | 1.3 | 1.3 | 1.3 | 1.3 | 1.3 |
| | Acid value of resin particles (A) (mgKOH/g) | 78 | 78 | 78 | 78 | 78 | 78 | 78 | 78 | 78 | 78 |
| | Average particle size (nm)* | 50 | 50 | 50 | 50 | 50 | 50 | 50 | 50 | 50 | 50 |
| | Solid content (%) | 30 | 30 | 30 | 30 | 30 | 30 | 30 | 30 | 30 | 30 |

(continued)

| | | | Examples | | | | | | | | | |
|---|---|---|---|---|---|---|---|---|---|---|---|---|
| | | | 21 | 22 | 23 | 24 | 25 | 26 | 27 | 28 | 29 | 30 |
| Ink composition (100 parts in total) | Emulsion of core/shell-type resin particles (A) (%) | | 33.3 | 33.3 | 33.3 | 33.3 | 33.3 | 33.3 | 33.3 | 33.3 | 33.3 | 33.3 |
| | Pigment (titanium oxide; solid content: 50%) (%) | | 44.4 | 44.4 | 44.4 | 44.4 | 44.4 | 44.4 | 44.4 | 44.4 | 44.4 | 44.4 |
| | Glycol ether (B), etc. (%) | Ethylene glycol monoisopropyl ether | 5 | | | | | | | | | |
| | | Ethylene glycol monoisobutyl ether | | 5 | | | | | | | | |
| | | Ethylene glycol monobutyl ether | | | 5 | | | | | | | |
| | | Ethylene glycol monohexyl ether | | | | 5 | | | | | | |
| | | Ethylene glycol monobenzyl ether | | | | | 5 | | | | | |
| | | Diethylene glycol monoethyl ether | | | | | | 5 | | | | |
| | | Diethylene glycol monoisopropyl ether | | | | | | | 5 | | | |
| | | Diethylene glycol monoisobutyl ether | | | | | | | | 5 | | |
| | | Diethylene glycol monohexyl ether | | | | | | | | | 5 | |
| | | Triethylene glycol monobutyl ether | | | | | | | | | | 5 |
| Note *: Average particle size of core/shell-type resin particles (A) | | | | | | | | | | | | |

EP 3 733 739 B1

TABLE 3-2

|  |  | Comparative Examples | | | | | | | | |
|---|---|---|---|---|---|---|---|---|---|---|
|  |  | 7 | 8 | 9 | 10 | 11 | 12 | 13 | 14 | 15 |
| Core portion (a1) | 2-Ethylhexyl methacrylate | 56.5 | 56.5 | 56.5 | 56.5 | 56.5 | 56.5 | 56.5 | 56.5 | 56.5 |
| Shell portion (a2) | EM1: Polymer P1 (neutralization: 70%) | 43.5 | 43.5 | 43.5 | 43.5 | 43.5 | 43.5 | 43.5 | 43.5 | 43.5 |
| Properties of core/shell-type resin particles (A) | Mass ratio [a1/a2] | 1.3 | 1.3 | 1.3 | 1.3 | 1.3 | 1.3 | 1.3 | 1.3 | 1.3 |
|  | Acid value of resin particles (A) (mgKOH/g) | 78 | 78 | 78 | 78 | 78 | 78 | 78 | 78 | 78 |
|  | Average particle size (nm)* | 50 | 50 | 50 | 50 | 50 | 50 | 50 | 50 | 50 |
|  | Solid content (%) | 30 | 30 | 30 | 30 | 30 | 30 | 30 | 30 | 30 |

26

(continued)

| | | Comparative Examples | | | | | | | | |
|---|---|---|---|---|---|---|---|---|---|---|
| | | 7 | 8 | 9 | 10 | 11 | 12 | 13 | 14 | 15 |
| Ink composition (100 parts in total) | Emulsion of core/shell-type resin particles (A) (%) | 33.3 | 33.3 | 33.3 | 33.3 | 33.3 | 33.3 | 33.3 | 33.3 | 33.3 |
| | Pigment (titanium oxide; solid content: 50%) (%) | 44.4 | 44.4 | 44.4 | 44.4 | 44.4 | 44.4 | 44.4 | 44.4 | 44.4 |
| | Glycol ether (B), etc. (%) — Ethylene glycol monoisopropyl ether | | | | | | | | | |
| | Ethylene glycol monoisobutyl ether | | | | | | | | | |
| | Ethylene glycol monobutyl ether | | | | | | | | | |
| | Ethylene glycol monohexyl ether | | | | | | | | | |
| | Ethylene glycol monobenzyl ether | | | | | | | | | |
| | Diethylene glycol monoethyl ether | | | | | | | | | |
| | Diethylene glycol monoisopropyl ether | | | | | | | | | |
| | Diethylene glycol monoisobutyl ether | | | | | | | | | |
| | Diethylene glycol monohexyl ether | | | | | | | | | |
| | Triethylene glycol monobutyl ether | | | | | | | | | |
| Note *: Average particle size of core/shell-type resin particles (A) | | | | | | | | | | |

TABLE 3-3

| Ink composition (100 parts in total) | Glycol ether (B), etc. (%) | | | Examples | | | | | | | | | |
|---|---|---|---|---|---|---|---|---|---|---|---|---|---|
| | | | | 21 | 22 | 23 | 24 | 25 | 26 | 27 | 28 | 29 | 30 |
| | | Ethylene glycol monomethyl ether | | | | | | | | | | | |
| | | Triethylene glycol monomethyl ether | | | | | | | | | | | |
| | | n-Propanol | | | | | | | | | | | |
| | | Ethylene glycol | | | | | | | | | | | |
| | | 1,4-Butanediol | | | | | | | | | | | |
| | | 1,2-Hexanediol | | | | | | | | | | | |
| | | 1,6-Hexanediol | | | | | | | | | | | |
| | | 1,2-Propanediol | | | | | | | | | | | |
| | | 1,3-Propanediol | | | | | | | | | | | |
| | Thickening agent (UH-420) | | | 0.3 | 0.3 | 0.3 | 0.3 | 0.3 | 0.3 | 0.3 | 0.3 | 0.3 | 0.3 |
| | Acetylene glycol-based surfactant | | | 1 | 1 | 1 | 1 | 1 | 1 | 1 | 1 | 1 | 1 |
| | Water | | | 16.0 | 16.0 | 16.0 | 16.0 | 16.0 | 16.0 | 16.0 | 16.0 | 16.0 | 16.0 |
| Properties of ink | Storage stability | | | A | A | A | A | A | A | A | A | A | A |
| | Substrate-adhesion properties | | | C | B | A | A | A | C | B | A | A | B |

TABLE 3-4

| | | | Comparative Examples | | | | | | | | |
|---|---|---|---|---|---|---|---|---|---|---|---|
| | | | 7 | 8 | 9 | 10 | 11 | 12 | 13 | 14 | 15 |
| Ink composition (100 parts in total) | Glycol ether (B), etc. (%) | Ethylene glycol monomethyl ether | 5 | | | | | | | | |
| | | Triethylene glycol monomethyl ether | | 5 | | | | | | | |
| | | n-Propanol | | | 5 | | | | | | |
| | | Ethylene glycol | | | | 5 | | | | | |
| | | 1,4-Butanediol | | | | | 5 | | | | |
| | | 1,2-Hexanediol | | | | | | 5 | | | |
| | | 1,6-Hexanediol | | | | | | | 5 | | |
| | | 1,2-Propanediol | | | | | | | | 5 | |
| | | 1,3-Propanediol | | | | | | | | | 5 |
| | Thickening agent (UH-420) | | 0.3 | 0.3 | 0.3 | 0.3 | 0.3 | 0.3 | 0.3 | 0.3 | 0.3 |
| | Acetylene glycol-based surfactant | | 1 | 1 | 1 | 1 | 1 | 1 | 1 | 1 | 1 |
| | Water | | 16.0 | 16.0 | 16.0 | 16.0 | 16.0 | 16.0 | 16.0 | 16.0 | 16.0 |
| Properties of ink | Storage stability | | A | A | C | C | C | C | C | C | C |
| | Substrate-adhesion properties | | E | E | Unmeasurable owing to gelation | | | | | | |

TABLE 4

| Glycol ethers (B) used in Examples | | Boiling point 1013 hPa (°C) | SP value (J/cm$^3$)$^{0.5}$ |
|---|---|---|---|
| Glycol ethers | Ethylene glycol monoisopropyl ether | 142 | 22.3 |
| | Ethylene glycol monoisobutyl ether | 161 | 18.6 |
| | Ethylene glycol monobutyl ether | 171 | 20.8 |
| | Ethylene glycol monohexyl ether | 208 | 20.3 |
| | Ethylene glycol monobenzyl ether | 256 | 22.4 |
| | Diethylene glycol monoethyl ether | 202 | 22.2 |
| | Diethylene glycol monoisopropyl ether | 207 | 20.3 |
| | Diethylene glycol monoisobutyl ether | 220 | 19.6 |
| | Diethylene glycol monohexyl ether | 259 | 19.8 |
| | Triethylene glycol monobutyl ether | 271 | 20.4 |
| Solvents used in Comparative Examples | | Boiling point 1013 hPa (°C) | SP value (J/cm$^3$)$^{0.5}$ |
| Glycol ethers | Ethylene glycol monomethyl ether | 125 | 23.4 |
| | Triethylene glycol monomethyl ether | 249 | 21.8 |
| Alcohol | n-Propanol | 97.2 | 24.6 |
| Dialcohol | Ethylene glycol | 198 | 33.0 |
| Dialcohol ethers | 1,4-Butanediol | 230 | 28.9 |
| | 1,2-Hexanediol | 223 | 24.7 |
| | 1,6-Hexanediol | 250 | 25.2 |
| | 1,2-Propanediol (propylene glycol) | 187 | 29.1 |
| | 1,3-Propanediol (trimethylene glycol) | 211 | 31.7 |

From Tables 1 to 3, it was confirmed that the aqueous inks obtained in Examples 1 to 30 were excellent in storage stability and substrate-adhesion properties as compared to the aqueous inks obtained in Comparative Examples 1 to 15.

**Claims**

1. A resin particle dispersion comprising core/shell-type resin particles (A), a glycol ether (B) and water, in which:

   a core portion resin of the core/shell-type resin particles (A) comprises a constitutional unit derived from a (meth)acrylic acid ester comprising a hydrocarbon group having not less than 2 and not more than 18 carbon atoms in an amount of not less than 40% by mass on the basis of constitutional units constituting the core portion resin, and an acid value of the core/shell-type resin particles (A) is not less than 50 mgKOH/g and not more than 100 mgKOH/g; and
   a hydrocarbon group in an ether moiety of the glycol ether (B) has not less than 2 and not more than 8 carbon atoms, and a content of the glycol ether (B) in the resin particle dispersion is not less than 2.8% by mass, and a mass ratio of the core portion resin (a1) to a resin (a2) corresponding to a shell portion other than the core portion resin [(a1)/(a2)] in the core/shell-type resin particles (A) is not less than 1 and not more than 1.35.

2. The resin particle dispersion according to claim 1, wherein the glycol ether (B) is at least one alkyl ether selected from the group consisting of an ethylene glycol monoalkyl ether, a diethylene glycol monoalkyl ether, a propylene glycol monoalkyl ether and a dipropylene glycol monoalkyl ether, and an alkyl group in the alkyl ether has not less than 2 and not more than 8 carbon atoms.

3. The resin particle dispersion according to claim 1 or 2, wherein the hydrocarbon group having not less than 2 and not more than 18 carbon atoms in the constitutional unit derived from the (meth)acrylic acid ester is at least one group selected from the group consisting of an alkyl group having not less than 3 and not more than 12 carbon atoms, a benzyl group and a 2-ethylhexyl group.

4. The resin particle dispersion according to any one of claims 1 to 3, wherein a content of water in the resin particle dispersion is not less than 30% by mass and not more than 80% by mass.

5. The resin particle dispersion according to any one of claims 1 to 4, further comprising a pigment.

6. The resin particle dispersion according to claim 5, wherein the pigment is a white pigment.

7. The resin particle dispersion according to any one of claims 1 to 6 for gravure printing.

8. The resin particle dispersion according to any one of claims 1 to 7, wherein a mass ratio of the content of water to the content of the glycol ether (B) [water/(B)] in the resin particle dispersion is not less than 0.5 and not more than 100.

9. The resin particle dispersion according to any one of claims 1 to 8, wherein a boiling point of the glycol ether (B) is not lower than 110°C and not higher than 290°C.

10. The resin particle dispersion according to any one of claims 1 to 9, wherein an SP value of the glycol ether (B) is not less than 18 $MPa^{0.5}$ [(18 $(J/cm^3)^{0.5}$] and not more than 23 $MPa^{0.5}$ [(23 $(J/cm^3)^{0.5}$].

11. The resin particle dispersion according to any one of claims 1 to 10, wherein a content of a water-soluble organic solvent other than the glycol ether (B) in the resin particle dispersion is not more than 15% by mass.

12. An aqueous ink for gravure printing, comprising the resin particle dispersion according to any one of claims 1 to 11, and a nonionic surfactant.

13. A use of the resin particle dispersion according to any one of claims 1 to 11 as an aqueous ink for gravure printing.

14. The use according to claim 13, wherein a resin film is used as a printing substrate.


**Patentansprüche**

1. Harzpartikeldispersion, umfassend Harzpartikel vom Kern/Mantel-Typ (A), einen Glycolether (B) und Wasser, worin:

ein Kernteil-Harz der Harzpartikel vom Kern/Mantel-Typ (A) eine Struktureinheit, die von einem (Meth)acrylsäureester abgeleitet ist, der eine Kohlenwasserstoffgruppe mit nicht weniger als 2 und nicht mehr als 18 Kohlenstoffatomen aufweist, in einer Menge von nicht weniger als 40 Massen-%, bezogen auf die Struktureinheiten, die das Kernteil-Harz bilden, umfasst, und eine Säurezahl der Harzpartikel vom Kern/Mantel-Typ (A) nicht weniger als 50 mgKOH/g und nicht mehr als 100 mgKOH/g beträgt; und
eine Kohlenwasserstoffgruppe in einer Ethergruppe des Glycolethers (B) nicht weniger als 2 und nicht mehr als 8 Kohlenstoffatome aufweist, und ein Gehalt des Glycolethers (B) in der Harzpartikeldispersion nicht weniger als 2,8 Massen-% beträgt, und
ein Massenverhältnis von dem Kernanteil-Harz (a1) zu einem Harz (a2), entsprechend einem Mantelteil, das nicht das Kernanteil-Harz ist, [(a1)/(a2)] in den Harzpartikeln vom Kern/Mantel-Typ (A) nicht weniger als 1 und nicht mehr als 1,35 beträgt.

2. Harzpartikeldispersion gemäß Anspruch 1, wobei der Glycolether (B) mindestens ein Alkylether ist, der aus der Gruppe ausgewählt ist, die aus einem Ethylenglycolmonoalkylether, einem Diethylenglycolmonoalkylether, einem Propylenglycolmonoalkylether und einem Dipropylenglycolmonoalkylether besteht, und eine Alkylgruppe in dem Alkylether nicht weniger als 2 und nicht mehr als 8 Kohlenstoffatome aufweist.

3. Harzpartikeldispersion gemäß Anspruch 1 oder 2, wobei die Kohlenwasserstoffgruppe mit nicht weniger als 2 und nicht mehr als 18 Kohlenstoffatomen in der von dem (Meth)acrylsäureester abgeleiteten Struktureinheit mindestens eine Gruppe ist, die aus der Gruppe ausgewählt ist, die aus einer Alkylgruppe mit nicht weniger als 3 und nicht mehr als 12 Kohlenstoffatomen, einer Benzylgruppe und einer 2-Ethylhexylgruppe besteht.

4. Harzpartikeldispersion gemäß einem der Ansprüche 1 bis 3, wobei ein Wassergehalt in der Harzpartikeldispersion nicht weniger als 30 Massen-% und nicht mehr als 80 Massen-% beträgt.

5. Harzpartikeldispersion gemäß einem der Ansprüche 1 bis 4, ferner umfassend ein Pigment.

6. Harzpartikeldispersion gemäß Anspruch 5, wobei das Pigment ein Weißpigment ist.

7. Harzpartikeldispersion gemäß einem der Ansprüche 1 bis 6, die für den Tiefdruck ist.

8. Harzpartikeldispersion gemäß einem der Ansprüche 1 bis 7, wobei in der Harzpartikeldispersion ein Massenverhältnis von dem Wassergehalt zu dem Gehalt an Glycolether (B) [Wasser/(B)] nicht weniger als 0,5 und nicht mehr als 100 beträgt.

9. Harzpartikeldispersion gemäß einem der Ansprüche 1 bis 8, wobei ein Siedepunkt des Glycolethers (B) nicht niedriger als 110°C und nicht höher als 290°C ist.

10. Harzpartikeldispersion gemäß einem der Ansprüche 1 bis 9, wobei ein SP-Wert des Glycolethers (B) nicht weniger als 18 MPa$^{0,5}$ [18 (J/cm$^3$)$^{0,5}$] und nicht mehr als 23 MPa$^{0,5}$ [23 (J/cm$^3$)$^{0,5}$] beträgt.

11. Harzpartikeldispersion gemäß einem der Ansprüche 1 bis 10, wobei in der Harzpartikeldispersion ein Gehalt an einem wasserlöslichen organischen Lösungsmittel, das nicht der Glycolether (B) ist, nicht mehr als 15 Massen-% beträgt.

12. Wässrige Tinte für den Tiefdruck, umfassend die Harzpartikeldispersion gemäß einem der Ansprüche 1 bis 11 und ein nichtionisches Tensid.

13. Verwendung der Harzpartikeldispersion gemäß einem der Ansprüche 1 bis 11 als wässrige Tinte für den Tiefdruck.

14. Verwendung gemäß Anspruch 13, wobei ein Harzfilm als Drucksubstrat verwendet wird.

**Revendications**

1. Dispersion de particules de résine comprenant des particules de résine de type noyau/coque (A), un éther de glycol (B) et de l'eau, dans laquelle :

    une résine de la partie noyau des particules de résine de type noyau/coque (A) comprend un motif constitutif dérivé d'un ester d'acide (méth)acrylique comprenant un groupe hydrocarboné n'ayant pas moins de 2 et pas plus de 18 atomes de carbone en une quantité de pas moins de 40 % en masse sur la base des motifs constitutifs constituant la résine de la partie noyau, et un indice d'acidité des particules de résine de type noyau/coque (A) n'est pas inférieur à 50 mg de KOH/g et pas supérieur à 100 mg de KOH/g ; et
    un groupe hydrocarboné dans un fragment éther de l'éther de glycol (B) n'a pas moins de 2 et pas plus de 8 atomes de carbone, et une teneur en éther de glycol (B) dans la dispersion de particules de résine n'est pas inférieure à 2,8 % en masse, et
    un rapport massique de la résine de la partie noyau (a1) par rapport à une résine (a2) correspondant à une partie coque autre que la résine de la partie noyau [(a1)/(a2)] dans les particules de résine de type noyau/coque (A) n'est pas inférieur à 1 et pas supérieur à 1,35.

2. Dispersion de particules de résine selon la revendication 1, dans laquelle l'éther de glycol (B) est au moins un éther d'alkyle sélectionné dans le groupe consistant en un éthylèneglycol-monoalkyléther, un diéthylèneglycol-monoalkyléther, un propylèneglycol-monoalkyléther et un dipropylèneglycol-monoalkyléther, et un groupe alkyle dans l'éther d'alkyle n'a pas moins de 2 et pas plus de 8 atomes de carbone.

3. Dispersion de particules de résine selon la revendication 1 ou la revendication 2, dans laquelle le groupe hydrocarboné n'ayant pas moins de 2 et pas plus de 18 atomes de carbone dans le motif constitutif dérivé de l'ester d'acide (méth)acrylique est au moins un groupe sélectionné dans le groupe consistant en un groupe alkyle n'ayant pas moins de 3 et pas plus de 12 atomes de carbone, un groupe benzyle et un groupe 2-éthylhexyle.

4. Dispersion de particules de résine selon l'une quelconque des revendications 1 à 3, dans laquelle une teneur en eau dans la dispersion de particules de résine n'est pas inférieure à 30 % en masse et pas supérieure à 80 % en masse.

5. Dispersion de particules de résine selon l'une quelconque des revendications 1 à 4, comprenant en outre un pigment.

6. Dispersion de particules de résine selon la revendication 5, dans laquelle le pigment est un pigment blanc.

7. Dispersion de particules de résine selon l'une quelconque des revendications 1 à 6 pour l'héliogravure.

8. Dispersion de particules de résine selon l'une quelconque des revendications 1 à 7, dans laquelle un rapport massique de la teneur en eau par rapport à la teneur en éther de glycol (B) [eau/(B)] dans la dispersion de particules de résine n'est pas inférieur à 0,5 et pas supérieur à 100.

9. Dispersion de particules de résine selon l'une quelconque des revendications 1 à 8, dans laquelle un point d'ébullition de l'éther de glycol (B) n'est pas inférieur à 110 °C et pas supérieur à 290 °C.

10. Dispersion de particules de résine selon l'une quelconque des revendications 1 à 9, dans laquelle une valeur SP de l'éther de glycol (B) n'est pas inférieure à 18 MPa$^{0,5}$ [(18 (J/cm$^3$)$^{0,5}$] et pas supérieure à 23 MPa$^{0,5}$ [(23 (J/cm$^3$)$^{0,5}$].

11. Dispersion de particules de résine selon l'une quelconque des revendications 1 à 10, dans laquelle une teneur en un solvant organique soluble dans l'eau autre que l'éther de glycol (B) dans la dispersion de particules de résine n'est pas supérieure à 15 % en masse.

12. Encre aqueuse pour héliogravure, comprenant la dispersion de particules de résine selon l'une quelconque des revendications 1 à 11, et un tensioactif non ionique.

13. Utilisation de la dispersion de particules de résine selon l'une quelconque des revendications 1 à 11 comme encre aqueuse pour l'héliogravure.

14. Utilisation selon la revendication 13, dans laquelle un film de résine est utilisé comme substrat d'impression.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014205816 A
- JP 2015030799 A